(19) Europäisches Patentamt

European Patent Office

Office européen des brevets

(11) **EP 4 593 493 A1**

(12) **EUROPEAN PATENT APPLICATION**
published in accordance with Art. 153(4) EPC

(43) Date of publication:
30.07.2025 Bulletin 2025/31

(21) Application number: 23870883.8

(22) Date of filing: 27.09.2023

(51) International Patent Classification (IPC):
$H04W\ 72/1268^{(2023.01)}$   $H04W\ 72/12^{(2023.01)}$
$H04W\ 72/0446^{(2023.01)}$   $H04W\ 72/0453^{(2023.01)}$
$H04W\ 72/232^{(2023.01)}$   $H04L\ 5/00^{(2006.01)}$

(52) Cooperative Patent Classification (CPC):
H04L 5/00; H04W 72/0446; H04W 72/0453;
H04W 72/12; H04W 72/1268; H04W 72/232

(86) International application number:
PCT/CN2023/121827

(87) International publication number:
WO 2024/067656 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.09.2022 CN 202211214269

(71) Applicant: Huawei Technologies Co., Ltd.
Shenzhen, Guangdong 518129 (CN)

(72) Inventors:
• LU, Shaozhong
  Shenzhen, Guangdong 518129 (CN)
• GUO, Zhiheng
  Shenzhen, Guangdong 518129 (CN)
• SONG, Xinghua
  Shenzhen, Guangdong 518129 (CN)

(74) Representative: Maiwald GmbH
Engineering
Elisenhof
Elisenstrasse 3
80335 München (DE)

(54) **UPLINK TRANSMISSION METHOD, AND COMMUNICATION APPARATUS**

(57) An uplink transmission method and a communication apparatus are provided. In the method, when only a frequency hopping pattern of an uplink time unit is configured, a new rule is introduced to map positions of N starting frequency resources in the frequency hopping pattern of the uplink time unit to an uplink subband in SBFD, to obtain the N starting frequency resources in the frequency hopping pattern of the corresponding SBFD time unit. The method can not only ensure that frequency hopping in the SBFD time unit does not exceed a range of the uplink subband, but also reduce signaling overheads compared with directly configuring two sets of frequency hopping patterns for an SBFD time unit and an uplink time unit.

Network device

Terminal device

S410: First signaling, where the first signaling instructs to send a first signal in a frequency hopping mode in a first time unit set

S420: Determine a second frequency hopping pattern based on a first frequency hopping pattern

S430: Determine the second frequency hopping pattern based on the first frequency hopping pattern

S440: Send the first signal in an SBFD time unit in the first time unit set based on the second frequency hopping pattern

FIG. 4

## Description

This application claims priority to Chinese Patent Application No. 202211214269.0, filed with the China National Intellectual Property Administration on September 30, 2022 and entitled "UPLINK TRANSMISSION METHOD AND COMMUNICATION APPARATUS", which is incorporated herein by reference in its entirety.

## TECHNICAL FIELD

Embodiments of this application relate to the communication field, and more specifically, to an uplink transmission method and a communication apparatus.

## BACKGROUND

With rapid development of the fifth generation mobile communication technology new radio (new radio, NR), various communication requirements emerge. To meet requirements of emerging services, a subband full duplex (subband non-overlapping full duplex, SBFD) solution is proposed to improve uplink coverage of a time division duplex (time division duplex, TDD) system. Subband full duplex means that in the TDD system, a network device can perform both receiving and sending in one slot or on one orthogonal frequency division multiplexing (orthogonal frequency division multiplexing, OFDM) symbol by using different subbands for uplink transmission and downlink transmission.

When a terminal device sends a first signal in a frequency hopping mode in a plurality of SBFD slots, because a frequency range of an uplink subband in an SBFD slot is less than a range of a bandwidth part (bandwidth part, BWP) in an uplink slot, the terminal device may be caused to hop out of the range of the uplink subband in the SBFD slot when the terminal device sends the first signal in the frequency hopping mode in the SBFD slot based on a frequency hopping pattern corresponding to an existing uplink slot. A possible solution is to configure two sets of independent frequency hopping patterns, where one set of frequency hopping patterns includes frequency hopping patterns corresponding to an SBFD slot, and the other set of frequency hopping patterns includes frequency hopping patterns corresponding to an uplink slot. Such a method is easy to implement, but increases signaling overheads.

## SUMMARY

Embodiments of this application provide an uplink transmission method and a communication apparatus to reduce signaling overheads while ensuring that frequency hopping in an SBFD slot does not exceed a range of an uplink subband.

According to a first aspect, a communication method is provided. The method may be performed by a terminal device, or may be performed by a component (such as a chip or a circuit) of a terminal device. This is not limited herein. For ease of description, the following uses an example in which the method is performed by the terminal device for description.

The method may include the following steps: The terminal device receives first signaling from a network device, where the first signaling indicates the terminal device to send a first signal in a frequency hopping mode in a first time unit set, the first signal is carried on a first physical uplink shared channel PUSCH or a first physical uplink control channel PUCCH, and the first time unit set includes at least two SBFD time units; the terminal device determines a second frequency hopping pattern based on a first frequency hopping pattern, where the first frequency hopping pattern indicates positions of N different starting frequency resources for sending the first signal in the frequency hopping mode in at least two uplink time units, the second frequency hopping pattern indicates positions of N different starting frequency resources for sending the first signal in the frequency hopping mode in the at least two SBFD time units, the positions of the starting frequency resources indicated by the second frequency hopping pattern are located in uplink subbands in the at least two SBFD time units, and N is an integer greater than or equal to 2; and the terminal device sends the first signal in the at least two SBFD time units based on the second frequency hopping pattern.

In the foregoing technical solution, when only the first frequency hopping pattern is configured, the terminal device may determine the second frequency hopping pattern of the SBFD time unit based on the first frequency hopping pattern, so that the positions of the N starting frequency resources indicated by the second frequency hopping pattern are located in the uplink subband in the SBFD time unit. The method can not only ensure that frequency hopping in the SBFD time unit does not exceed a range of the uplink subband, but also reduce signaling overheads compared with directly configuring two sets of frequency hopping patterns for an SBFD time unit and an uplink time unit.

According to a second aspect, a communication method is provided. The method may be performed by a network device, or may be performed by a component (such as a chip or a circuit) of a network device. This is not limited herein. For ease of description, the following uses an example in which the method is performed by the network device for description.

The method may include the following steps: The network device sends first signaling to a terminal device, where the first signaling indicates the terminal device to send a first signal in a frequency hopping mode in a first time unit set, the first signal is carried on a first physical uplink shared channel PUSCH or a first physical uplink control channel PUCCH, and the first time unit set includes at least two SBFD time units; the network device determines a second frequency hopping pattern based on a first frequency hopping pattern, where the first frequency hopping pattern indicates positions of N different starting frequency resources for sending the first signal in the frequency hopping mode in at least two uplink time units, the second frequency hopping pattern indicates positions of N different starting frequency resources for sending the first signal in the frequency hopping mode in the at least two SBFD time units, the positions of the starting frequency resources indicated by the second frequency hopping pattern are located in uplink subbands in the at least two SBFD time units, and N is an integer greater than or equal to 2; and the network device receives the first signal from the terminal device in the at least two SBFD time units based on the second frequency hopping pattern.

For beneficial effects of the second aspect, refer to the descriptions in the first aspect. Details are not described herein again.

In some implementations of the first aspect and the second aspect, an index $RB'_{start,j}$ of a $j^{th}$ starting frequency resource of the N starting frequencies in the second frequency hopping pattern is determined based on $RB_{start,j} mod N_{UL\,subband}^{size}$, where $RB_{start,j}$ is an index of a $j^{th}$ starting frequency resource of the N starting frequency resources in the first frequency hopping pattern, $N_{UL\,subband}^{size}$ is a quantity of frequency resources of the uplink subband in the SBFD time unit, and j = 1, 2, ..., N.

In some implementations of the first aspect and the second aspect, the index $RB'_{start,j}$ of the $j^{th}$ starting frequency resource of the N starting frequencies in the second frequency hopping pattern meets the following formula:

$$RB'_{start,j} = RB_{start,j} mod N_{UL\,subband}^{size} + RB_{UL\,subband}^{start}$$, where $RB_{UL\,subband}^{start}$ is an index of a starting frequency resource of the uplink subband in the SBFD time unit.

In the foregoing technical solution, because a value range of $RB_{start,j} mod N_{UL\,subband}^{size}$ is greater than or equal to 0 and less than $N_{UL\,subband}^{size}$, $RB'_{start,j}$ can be always located in the uplink subband in SBFD.

In some implementations of the first aspect and the second aspect, an index $RB'_{start,j}$ of a $j^{th}$ starting frequency resource of the N starting frequencies in the second frequency hopping pattern is determined based on a first scaling parameter $\alpha$ and $RB_{start,j}$, where $RB_{start,j}$ is an index of a $j^{th}$ starting frequency resource of the N starting frequencies in the first frequency hopping pattern, $\alpha$ is greater than 0 and less than 1, and j = 1, 2, ..., N.

In some implementations of the first aspect and the second aspect, the index $RB'_{start,j}$ of the $j^{th}$ starting frequency resource of the N frequency hopping starting frequencies in the second frequency hopping pattern meets the following formula: $$RB'_{start,j} = [RB_{start,j} \times \alpha] + RB_{UL\,subband}^{start}$$, where $RB_{UL\,subband}^{start}$ is an index of a starting frequency resource of the uplink subband in the SBFD time unit, and [ ] represents a round-up operation, a round-down operation, or a round-off operation.

According to a third aspect, a communication method is provided. The method may be performed by a terminal device, or may be performed by a component (such as a chip or a circuit) of a terminal device. This is not limited herein. For ease of description, the following uses an example in which the method is performed by the terminal device for description.

The method may include the following steps: The terminal device receives first signaling from a network device, where the first signaling indicates the terminal device to send a first signal in a frequency hopping mode in a first time unit set, the first signal is carried on a first physical uplink shared channel PUSCH or a first physical uplink control channel PUCCH, and the first time unit set includes at least two SBFD time units; the terminal device determines a second frequency hopping pattern, where the second frequency hopping pattern indicates positions of N different starting frequency resources for sending the first signal in the frequency hopping mode in the at least two SBFD time units, the positions of the starting frequency resources indicated by the second frequency hopping pattern are located in uplink subbands in the at least two SBFD time units, and N is an integer greater than or equal to 2; and the terminal device sends the first signal in the at least two SBFD time units to the network device based on the second frequency hopping pattern.

In the foregoing technical solution, the terminal device directly provides the second frequency hopping pattern at a fixed position based on a position of the uplink subband. This can ensure that frequency hopping in the SBFD time unit does not exceed a range of the uplink subband, and can reduce signaling overheads as compared with directly configuring two sets of frequency hopping patterns for an SBFD time unit and an uplink time unit.

According to a fourth aspect, a communication method is provided. The method may be performed by a network device, or may be performed by a component (such as a chip or a circuit) of a network device. This is not limited herein. For ease of description, the following uses an example in which the method is performed by the network device for description.

The method may include the following steps: The network device sends first signaling to a terminal device, where the first signaling indicates the terminal device to send a first signal in a frequency hopping mode in a first time unit set, the first signal is carried on a first physical uplink shared channel PUSCH or a first physical uplink control channel PUCCH, and the first time unit set includes at least two SBFD time units; the network device determines a second frequency hopping pattern, where the second frequency hopping pattern indicates positions of N different starting frequency resources for sending the first signal in the frequency hopping mode in the at least two SBFD time units, the positions of the starting frequency resources indicated by the second frequency hopping pattern are located in uplink subbands in the at least two SBFD time units, and N is an integer greater than or equal to 2; and the network device receives the first signal from the terminal device in the at least two SBFD time units based on the second frequency hopping pattern.

For beneficial effects of the fourth aspect, refer to the descriptions in the third aspect. Details are not described herein again.

In some implementations of the third aspect and the fourth aspect, N = 2, and when the first signal is carried on the first PUSCH, an index of a frequency hopping starting frequency in the second frequency hopping pattern is $RB_{UL\,subband}^{start}$, $RB_{UL\,subband}^{start}$ is an index of a starting frequency resource of the uplink subband in the SBFD time unit, and an index of another frequency hopping starting frequency resource in the second frequency hopping pattern is

$$RB_{ULsubband}^{start} + N_{ULsubband}^{size} - L_{RBs}$$

, where $N_{ULsubband}^{size}$ is a quantity of frequency resources of the uplink subband in the SBFD time unit, and $L_{RBs}$ is a quantity of frequency resources of the uplink subband that are allocated to one PUSCH.

In some implementations of the third aspect and the fourth aspect, N = 2, and when the first signal is carried on the first PUCCH, an index of a frequency hopping starting frequency in the second frequency hopping pattern is an index of a starting frequency resource of the uplink subband in the SBFD time unit plus a first offset value, and an index of another frequency hopping starting frequency in the second frequency hopping pattern is an index of an ending frequency resource of the uplink subband in the SBFD time unit minus the first offset value, where the first offset value is determined based on at least one of the following parameters: an offset value $RB_{UL\,subband}^{offset}$ of a frequency resource, a total quantity $N_{CS}$ of initial cyclic shift indexes in an initial cyclic shift index set, and a PUCCH resource index $r_{PUCCH}$.

In some implementations of the third aspect and the fourth aspect, when $\lfloor r_{PUCCH}/8 \rfloor = 0$, the first offset value is $RB_{UL\,subband}^{offset} + \lfloor r_{PUCCH}/N_{CS} \rfloor$, or when $\lfloor r_{PUCCH}/8 \rfloor = 1$, the first offset value is $RB_{UL\,subband}^{offset} + \lfloor (r_{PUCCH}-8)/N_{CS} \rfloor$.

According to a fifth aspect, a communication method is provided. The method may be performed by a terminal device, or may be performed by a component (such as a chip or a circuit) of a terminal device. This is not limited herein. For ease of description, the following uses an example in which the method is performed by the terminal device for description.

The method may include the following steps: The terminal device receives first signaling from a network device, where the first signaling indicates the terminal device to receive a first signal in a first time unit set, the first signaling includes first information and second information, the first information indicates a position of a starting frequency resource in a first frequency resource set and a quantity of frequency resources included in the first frequency resource set, the second information indicates a spacing between the starting frequency resource in the first frequency resource set and a starting frequency resource in a second frequency resource set, the first signal is carried on a first physical downlink shared channel PDSCH, the first time unit set includes a first time unit, and the first time unit is an SBFD time unit including at least two downlink subbands; the terminal device determines the first frequency resource set based on the first information; the terminal device determines the second frequency resource set based on the first information and the second information, where a quantity of frequency resources included in the second frequency resource set is the same as the quantity of frequency resources included in the first frequency resource set, or a quantity of frequency resources included in the second frequency resource set is predefined or configured by the network device; and the terminal device receives the first signal from the network device in the first frequency resource set and the second frequency resource set in the first time unit.

Compared with an existing resource allocation type 1, in the foregoing technical solution, the second information is added to the first signaling to indicate a spacing between the two frequency resource sets, so that PDSCH frequency resource allocation can be implemented in two discontinuous downlink subbands in the SBFD time unit, thereby improving frequency resource utilization of the SBFD time unit. In addition, compared with a resource allocation type 0, in this method, a case in which a guard bandwidth needs to occupy at least one RBG does not occur, and more frequency resources can be used.

In some implementations of the fifth aspect, the first time unit set further includes a second time unit, the second time unit is a downlink time unit, and the method further includes: the terminal device receives the first signal in the first frequency resource set and the second frequency resource set in the second time unit.

In some implementations of the fifth aspect, the first time unit set further includes a second time unit, the second time unit is a downlink time unit, and the method further includes: the terminal device determines a third frequency resource set, where a starting frequency resource in the third frequency resource set is a frequency resource with a smallest index among frequency resources in the first frequency resource set and the second frequency resource set, and an ending frequency resource in the third frequency resource set is a frequency resource with a largest index among the frequency resources in the first frequency resource set and the second frequency resource set; and the terminal device receives the first signal from the network device in the third frequency resource set in the second time unit, where the third frequency resource set is a segment of continuous frequency resources.

According to a sixth aspect, a communication method is provided. The method may be performed by a network device, or may be performed by a component (such as a chip or a circuit) of a network device. This is not limited herein. For ease of description, the following uses an example in which the method is performed by the network device for description.

The method may include the following steps: The network device sends first signaling to a terminal device, where the first signaling indicates the terminal device to receive a first signal in a first time unit set, the first signaling includes first information and second information, the first information indicates a position of a starting frequency resource in a first frequency resource set and a quantity of frequency resources included in the first frequency resource set, the second information indicates a spacing between the starting frequency resource in the first frequency resource set and a starting frequency resource in a second frequency resource set, the first signal is carried on a first physical downlink shared channel PDSCH, the first time unit set includes a first time unit, and the first time unit is an SBFD time unit including at least two downlink subbands; and the network device sends the first signal to the terminal device in the first frequency resource set and the second frequency resource set in the first time unit, where a quantity of frequency resources included in the second frequency resource set is the same as the quantity of frequency resources included in the first frequency resource set, or a quantity of frequency resources included in the second frequency resource set is predefined or configured by the network device.

For beneficial effects of the sixth aspect, refer to the descriptions in the fifth aspect. Details are not described herein again.

In some implementations of the sixth aspect, the first time unit set further includes a second time unit, the second time unit is a downlink time unit, and the method further includes: the network device sends the first signal to the terminal device in the first frequency resource set and the second frequency resource set in the second time unit.

In some implementations of the sixth aspect, the first time unit set further includes a second time unit, the second time unit is a downlink time unit, and the method further includes: the network device determines a third frequency resource set, where a starting frequency resource in the third frequency resource set is a frequency resource with a smallest index among frequency resources in the first frequency resource set and the second frequency resource set, and an ending frequency resource in the third frequency resource set is a frequency resource with a largest index among the frequency resources in the first frequency resource set and the second frequency resource set; and the network device sends the first signal to the terminal device in the third frequency resource set in the second time unit, where the third frequency resource set is a segment of continuous frequency resources.

According to a seventh aspect, a communication method is provided. The method may be performed by a terminal device, or may be performed by a component (such as a chip or a circuit) of a terminal device. This is not limited herein. For ease of description, the following uses an example in which the method is performed by the terminal device for description.

The method may include the following steps: The terminal device receives first signaling from a network device, where the first signaling indicates the terminal device to receive a first signal in a first time unit set; the terminal device determines the first time unit set, where when the first time unit set includes a first time unit, the first time unit is an SBFD time unit including at least two downlink subbands, the first signaling includes first information and second information, the first information indicates a position of a starting frequency resource in a first frequency resource set and a quantity of frequency resources included in the first frequency resource set, and the second information indicates a spacing between the starting frequency resource in the first frequency resource set and a starting frequency resource in a second frequency resource set; the terminal device determines the first frequency resource set based on the first information, and the terminal device determines the second frequency resource set based on the first information and the second information, where a quantity of frequency resources included in the second frequency resource set is the same as the quantity of frequency resources included in the first frequency resource set, or a quantity of frequency resources included in the second frequency resource set is predefined or configured by the network device; the terminal device receives the first signal in the first frequency resource set and the second frequency resource set in the first time unit set, where when the first time unit set does not include the first time unit, the first signaling includes fourth information, and the fourth information indicates a position of a starting frequency resource in a fourth frequency resource set and a quantity of frequency resources included in the fourth frequency resource set; the terminal device determines the fourth frequency resource set based on the fourth information; and the terminal device sends the first signal in the fourth frequency resource set in the first time unit set.

It may be understood that, in this scenario, the terminal device interprets the first signaling based on different time unit types. When the first time unit set includes only a downlink time unit, the terminal device considers that the first signaling is configured according to the conventional technology. When the first time unit set includes only the SBFD time unit with at least two downlink subbands, the terminal device considers that the first signaling is interpreted according to the manner provided in this application, and the first signaling includes first signaling and second signaling. In this way, PDSCH frequency resource allocation can be implemented in two discontinuous downlink subbands in the SBFD time unit, thereby improving frequency resource utilization of the SBFD time unit.

According to an eighth aspect, a communication method is provided. The method may be performed by a network device, or may be performed by a component (such as a chip or a circuit) of a network device. This is not limited herein. For ease of description, the following uses an example in which the method is performed by the network device for description.

The method may include the following steps: The network device sends first signaling to a terminal device, where the first signaling indicates the terminal device to receive a first signal in a first time unit set, where when the first time unit set includes a first time unit, the first time unit is an SBFD time unit including at least two downlink subbands, the first signaling includes first information and second information, the first information indicates a position of a starting frequency resource in a first frequency resource set and a quantity of frequency resources included in the first frequency resource set, and the second information indicates a spacing between the starting frequency resource in the first frequency resource set and a starting frequency resource in a second frequency resource set; the network device sends the first signal to the terminal device in the first frequency resource set and the second frequency resource set in the first time unit set, where a quantity of frequency resources included in the second frequency resource set is the same as the quantity of frequency resources included in the first frequency resource set, or a quantity of frequency resources included in the second frequency resource set is predefined or configured by the network device, where when the first time unit set does not include the first time unit, the first signaling includes fourth information, and the fourth information indicates a position of a starting frequency resource in a fourth frequency resource set and a quantity of frequency resources included in the fourth frequency resource set; and the network device sends the first signal in the fourth frequency resource set in the first time unit set.

For beneficial effects of the eighth aspect, refer to the descriptions in the seventh aspect. Details are not described herein again.

According to a ninth aspect, a communication apparatus is provided. The apparatus is configured to perform the method provided in the first aspect, the third aspect, the fifth aspect, or the seventh aspect. Specifically, the apparatus may include units and/or modules configured to perform the method according to any one of the first aspect, the third aspect, the fifth aspect, the seventh aspect, or the possible implementations of the first aspect, the third aspect, the fifth aspect, or the seventh aspect, for example, a processing unit and/or a communication unit.

In an implementation, the apparatus is a terminal device. When the apparatus is the terminal device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a tenth aspect, a communication apparatus is provided. The apparatus is configured to perform the method provided in the second aspect, the fourth aspect, the sixth aspect, or the eighth aspect. Specifically, the apparatus may include units and/or modules configured to perform the method according to any one of the second aspect, the fourth aspect, the sixth aspect, the eighth aspect, or the possible implementations of the second aspect, the fourth aspect, the sixth aspect, or the eighth aspect, for example, a processing unit and/or a communication unit.

In an implementation, the apparatus is a network device. When the apparatus is the network device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a network device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to an eleventh aspect, a communication apparatus is provided. The apparatus includes at least one processor, where the at least one processor is coupled to at least one memory, the at least one memory is configured to store a computer program or instructions, and the at least one processor is configured to invoke and run the computer program or the instructions from the at least one memory, so that the communication apparatus performs the method according to any one of the first aspect, the third aspect, the fifth aspect, or the possible implementations of the first aspect, the third aspect, or the fifth aspect.

In an implementation, the apparatus is a terminal device.

In another implementation, the apparatus is a chip, a chip system, or a circuit used in a terminal device.

According to a twelfth aspect, a communication apparatus is provided. The apparatus includes at least one processor, where the at least one processor is coupled to at least one memory, the at least one memory is configured to store a computer program or instructions, and the at least one processor is configured to invoke and run the computer program or the instructions from the at least one memory, so that the communication apparatus performs the method according to any one of the second aspect, the fourth aspect, the sixth aspect, the eighth aspect, or the possible implementations of the second aspect, the fourth aspect, the sixth aspect, or the eighth aspect.

In an implementation, the apparatus is a network device.

In another implementation, the apparatus is a chip, a chip system, or a circuit used in a network device.

According to a thirteenth aspect, a processor is provided and configured to perform the methods provided in the foregoing aspects.

Unless otherwise specified, or if operations such as sending and obtaining/receiving related to the processor do not conflict with actual functions or internal logic in related descriptions, the operations may be understood as operations such as outputting, receiving, and inputting performed by the processor, or may be understood as sending and receiving operations performed by a radio frequency circuit and an antenna. This is not limited in this application.

According to a fourteenth aspect, a computer-readable storage medium is provided. The computer-readable storage medium stores program code executed by a device, and the program code is used to perform the method according to any one of the first aspect to the eighth aspect or the possible implementations of the first aspect to the eighth aspect.

According to a fifteenth aspect, a computer program product including instructions is provided. When the computer program product runs on a computer, the computer is enabled to perform the method according to any one of the first aspect to the eighth aspect or the possible implementations of the first aspect to the eighth aspect.

According to a sixteenth aspect, a chip is provided. The chip includes a processor and a communication interface. The processor reads, through the communication interface, instructions stored in a memory, to perform the method according to any one of the first aspect to the eighth aspect or the possible implementations of the first aspect to the eighth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any one of the first aspect to the eighth aspect or the possible implementations of the first aspect to the eighth aspect.

According to a seventeenth aspect, a communication system is provided. The communication system includes the communication apparatuses shown in the eleventh aspect and the twelfth aspect.

**BRIEF DESCRIPTION OF DRAWINGS**

FIG. 1 is a diagram of a communication system according to an embodiment of this application;

FIG. 2 is a time-frequency diagram of subband full duplex;

FIG. 3 is a diagram for configuring two sets of independent frequency hopping patterns for an SBFD slot and an uplink slot;

FIG. 4 is a schematic flowchart of an uplink transmission method according to this application;

FIG. 5 is a schematic flowchart of a downlink transmission method according to this application;

FIG. 6 is a block diagram of a communication apparatus 200 according to this application; and

FIG. 7 is a diagram of a structure of a communication apparatus 300 according to this application.

**DESCRIPTION OF EMBODIMENTS**

The following describes technical solutions in embodiments of this application with reference to accompanying drawings.

The technical solutions in the embodiments of this application may be applied to various communication systems, for example, 5th generation (5th generation, 5G), new radio (new radio, NR), long term evolution (long term evolution, LTE), the internet of things (internet of things, IoT), wireless fidelity (wireless fidelity, Wi-Fi), and the 3rd Generation Partnership Project (3rd Generation Partnership Project, 3GPP) related wireless communication, or other future wireless communication.

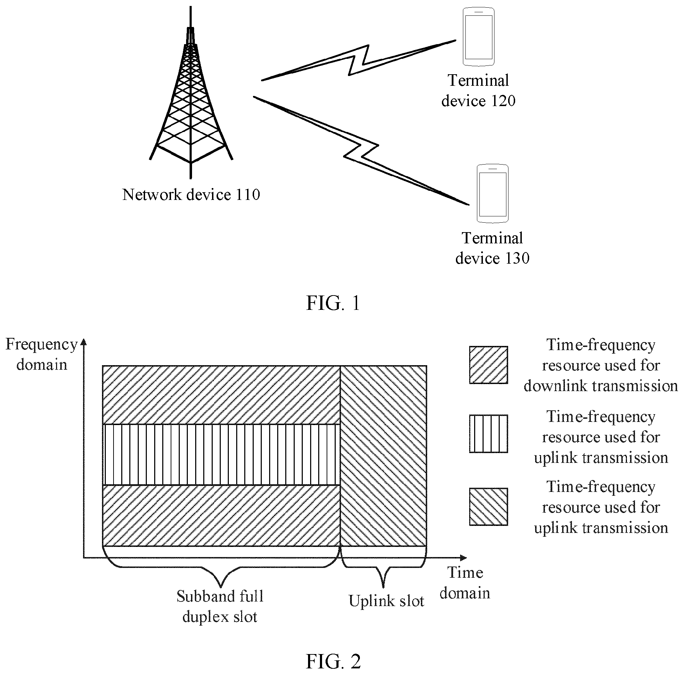

FIG. 1 is a diagram of a communication system according to an embodiment of this application. The communication system 100 includes at least one network device, for example, a network device 110 shown in FIG. 1. The communication system 100 may further include at least one terminal device, for example, a terminal device 120 and/or a terminal device 130 shown in FIG. 1. The network device 110 may communicate with the terminal device 120/130 via a radio link to exchange information. It may be understood that the network device and the terminal device may also be referred to as communication devices.

The network device is a network-side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a next generation NodeB (next generation NodeB, gNB) in a 5G mobile communication system, a subsequent evolved 3GPP base station, a transmission reception point (transmission reception point, TRP), an access node in a Wi-Fi system, a wireless relay node, or a wireless backhaul node. In communication systems using different radio access technologies (radio access technologies, RATs), names of devices having base station functions may be different. For example, the base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include one or more central units (central units, CUs), one or more distributed units (distributed units, DUs), or one or more CUs and one or more DUs. For example, functions of the CU may be implemented by one entity or different entities. For example, the functions of the CU are further divided. In other words, a control plane and a user plane are separated and implemented by different entities, which are respectively a control plane CU entity (CU-CP entity) and a user plane CU entity (CU-UP entity). The CU-CP entity and the CU-UP entity may be coupled to the DU, to jointly complete a function of an access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. In this way, some functions of a radio access network device may be implemented by a plurality of network function entities. These network function entities may be network elements in a hardware device, or may be software functions run on dedicated hardware, or may be virtualized functions instantiated on a platform (for example, a cloud platform). The network device may further include an active antenna unit (active antenna unit, AAU for short). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. For another example, in a vehicle to everything (vehicle to everything, V2X) technology, the access network device may be a road side unit (road side unit, RSU). A plurality of access network devices in the communication system may be base stations of a same type, or may be base stations of different types. The base station may communicate with the terminal device, or may communicate with the terminal device via a relay station. In embodiments of this application, an apparatus configured to implement a function of the network device may be the network device, or may be an apparatus that can support the network device in implementing the function, for example, a chip system or a combined component or component that can implement a function of the access network device. The apparatus may be installed in the network device. In this embodiment of this application, the chip system may include a chip or may include a chip and another discrete component.

The terminal device is a user-side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, V2X communication, machine-to-machine/machine-type communication (machine-to-machine/machine-type communication, M2M/MTC) communication, Internet of Things, virtual reality (virtual reality, VR), augmented reality (augmented reality, AR), industrial control (industrial control), self-driving (self-driving), remote medical (remote medical), a smart grid (smart grid), smart furniture, smart office, smart wearable, smart transportation, a smart city (smart city), an uncrewed aerial vehicle, and a robot. For example, the terminal device may be a handheld terminal in the cellular communication, a communication device in the D2D, an Internet of Things device in the MTC, a surveillance camera in the smart transportation and the smart city, or a communication device in the uncrewed aerial vehicle. The terminal device may be sometimes referred to as user equipment (user equipment, UE), a user terminal, a user apparatus, a subscriber unit, a subscriber station, a terminal, an access terminal, an access station, a UE station, a remote station, a mobile device, a wireless communication device, or the like. In embodiments of this application, an apparatus configured to implement a function of the terminal device may be the terminal device, or may be an apparatus that can support the terminal device in implementing the function, for example, a chip system or a combined component or component that can implement a function of the terminal device. The apparatus may be installed in the terminal device.

To facilitate understanding of embodiments of this application, concepts and related procedures in this application are described first.

1. Symbol (symbol): It is an abbreviation for a time domain symbol, and may also be referred to as an OFDM symbol. It should be noted that the time domain symbol may also be named in combination with other multiple access modes. This is not limited in embodiments of this application. For different subcarrier spacings, time domain symbol lengths may be different.

It should be understood that three types of symbols may be included in a slot (slot): a downlink symbol, an uplink symbol, and a flexible symbol. The uplink symbol can be used only for uplink transmission. The downlink symbol can be used only for downlink transmission. The flexible symbol has no determined transmission direction, and may be used for uplink transmission or downlink transmission based on an indication of control signaling. Symbols in one slot may be all downlink symbols, all uplink symbols, all flexible symbols, or a combination of several types of symbols.

2. Time unit: The time unit may be a slot, a symbol, a subframe, a half frame, a frame, a mini-subframe, a mini-slot, a transmission occasion (transmission occasion, TO), or a slot, a symbol, a slot set, or a symbol set in which each hop of inter-slot frequency hopping, intra-slot frequency hopping, inter-repetition frequency hopping, inter-slot-group frequency hopping, or the like is located. This is not limited in this application.

3. Subband: A subband is a part of a frequency band in a carrier, that is, one or more continuous physical resource blocks (physical resource blocks, PRBs) in frequency domain. In this application, the subband may also be understood as a frequency resource.

4. SBFD: In an SBFD solution, one carrier or one bandwidth part (bandwidth part, BWP) is divided into a plurality of non-overlapping subbands, and transmission directions of different subbands may be different. In other words, one carrier includes a first subband and a second subband that do not overlap, and the first subband and the second subband have different transmission directions. It should be noted that the first subband and the second subband are two types of subbands with different transmission directions, and do not mean that one carrier includes only two subbands. For example, a carrier includes subband #1 and subband #2, where transmission directions of subband #1 and subband #2 are different. Alternatively, a carrier includes subband #1, subband #2, and subband #3, where transmission directions of subband #1 and subband #3 are the same, and transmission directions of subband #1 and subband #2 are different.

5. SBFD time unit: Frequency resources in an SBFD time unit include an uplink frequency resource and a downlink frequency resource, where the uplink frequency resource is used for uplink transmission, and the downlink frequency resource is used for downlink transmission.

FIG. 2 is a diagram of time-frequency division in a typical SBFD solution. A horizontal axis represents time domain, and a vertical axis represents frequency domain. In FIG. 2, two rectangular blocks filled with forward slashes respectively represent a set of time-frequency resources used for downlink transmission, and a rectangular block filled with vertical lines represents a set of time-frequency resources used for uplink transmission. Time domain resources occupied by the three time-frequency resource blocks within a time domain range are referred to as an SBFD time unit.

6. Non-SBFD time unit: A frequency resource corresponding to each of all symbols included in a non-SBFD time unit is used only for downlink transmission or used only for uplink transmission. For example, all the symbols in the non-SBFD time unit are downlink symbols, or all the symbols in the non-full duplex time unit are uplink symbols; or some symbols in the non-full duplex time unit are downlink symbols and some are uplink symbols; or some symbols in the non-full duplex time unit are downlink symbols, some are uplink symbols, and some are flexible symbols; or some symbols in the non-full duplex time unit are downlink symbols and some are flexible symbols; or some symbols in the non-full duplex time unit are uplink symbols and some are flexible symbols. For example, a rectangular block filled with backslashes in FIG. 2 represents a set of time-frequency resources used for uplink transmission, and a slot occupied by the rectangular block within a time domain range is referred to as an uplink time unit. Transmission directions of all frequency resources in the time unit are uplink, and the time unit may be referred to as a non-SBFD slot.

7. Time unit type: including an uplink time unit, a downlink time unit, and an SBFD time unit. A frequency resource corresponding to the uplink time unit is used only for uplink transmission, a frequency resource corresponding to the downlink time unit is used only for downlink transmission, and frequency resources corresponding to the SBFD time unit include an uplink frequency resource and a downlink frequency resource. The uplink frequency resource is used for uplink transmission, and the downlink frequency resource is used for downlink transmission.

8. Multi-slot (Multi-slot) PUSCH: including a PUSCH repetition type A (PUSCH repetition type A), a PUSCH repetition type B (PUSCH repetition type B), and a transport block processing over multiple slots (transport block processing over multiple slots, TBoMS PUSCH) PUSCH. The multi-slot PUCCH includes a PUCCH repetition (PUCCH repetition).

9. PUSCH frequency resource allocation: including an uplink resource allocation type 0 (uplink resource allocation type 0) and an uplink resource allocation type 1 (uplink resource allocation type 1). The following describes the two frequency resource allocation types in detail.

(1) Uplink resource allocation type 0

One uplink BWP of UE includes resource block groups (resource block groups, RBGs), where the RBG is a set of continuous virtual resource blocks (virtual resource blocks, VRBs). A frequency domain resource assignment (frequency domain resource assignment) field in downlink control information (downlink control information, DCI) includes a bitmap indicating a resource block group (resource block group, RBG) allocated to the UE. Each bit in bits of the bitmap corresponds to one RBG in the BWP of the UE. In this way, each RBG in the BWP is addressable. A sequence of the RBG bitmap is as follows: The most significant bit (most significant bit, MSB) of the bitmap to the least significant bit (least significant bit, LSB) of the bitmap are sequentially mapped to an RBG 0 to an RBG($N_{RBG}$ -1) of the BWP. If a value of a corresponding bit in the bitmap is 1, an RBG corresponding to the bit is allocated to the UE; otherwise, the RBG corresponding to the bit is not allocated to the UE.

(2) Uplink resource allocation type 1

A set of non-interleaved VRBs continuously allocated in an active BWP is indicated to scheduled UE based on frequency domain resource assignment in DCI, where a size of the active BWP is $N_{BWP}^{size}$ physical resource blocks (physical resource blocks, PRBs). The frequency domain resource assignment field in the DCI includes a resource indication value (resource indication value, RIV), and the RIV includes an index $RB_{start}$ of a starting VRB and a length $L_{RBs}$ of continuously allocated VRBs, and is defined as follows:

$$\text{if } \left(L_{RBs}-1\right) \leq \left\lfloor N_{BWP}^{size} / 2 \right\rfloor \text{ then}$$

$$RIV = N_{BWP}^{size}\left(L_{RBs}-1\right) + RB_{start};$$

$$\text{else}$$

$$RIV = N_{BWP}^{size}\left(N_{BWP}^{size} - L_{RBs} + 1\right) + \left(N_{BWP}^{size} - 1 - RB_{start}\right).$$

$$N_{BWP}^{size} - RB_{start} \geq L_{RBs} \geq 1, \text{ and } \left\lfloor \ \right\rfloor \text{ represents round-down.}$$

It should be understood that the foregoing definition is valid for DCI formats 0_0 and 0_1 and does not include a decoded DCI format (format) 0_0 in a common search space. In this case, a size of an initial uplink (uplink, UL) BWP should be used.

It should be noted that downlink frequency resource allocation of a PDSCH is similar to uplink frequency resource allocation of a PUSCH. For details, refer to descriptions in the protocols TS 38.212 and TS 38.214. Details are not described herein.

10. PUSCH frequency hopping

A PUSCH other than the PUSCH repetition type B supports two PUSCH frequency hopping modes: intra-slot frequency hopping and inter-slot frequency hopping.

(1) Intra-slot frequency hopping: Intra-slot frequency hopping can be applied to single-slot PUSCH transmission and multi-slot PUSCH transmission. The multi-slot PUSCH transmission includes the PUSCH repetition type A and the transport block processing over multiple slots PUSCH.

An intra-slot frequency hopping pattern is shown in the following formula:

$$RB_{start}(i) = \begin{cases} RB_{start} & i = 0 \\ (RB_{start} + RB_{offset}) \bmod N_{BWP}^{size} & i = 1 \end{cases},$$

where $i = 0$ and $i = 1$ respectively indicate a first hop and a second hop in one slot, $RB_{start}$ indicates an index of a starting resource block (resource block, RB) in the uplink BWP, and $RB_{offset}$ indicates a frequency hopping interval between two frequency hops, where the frequency hopping interval is in units of RBs. A quantity of symbols in the first hop is $\left\lfloor N_{symb}^{PUSCH,s} / 2 \right\rfloor$, and a quantity of symbols in the second hop is $N_{symb}^{PUSCH,s} - \left\lfloor N_{symb}^{PUSCH,s} / 2 \right\rfloor$, where $N_{symb}^{PUSCH,s}$ is a quantity of symbols occupied for PUSCH transmission in one slot. For example, if a terminal device sends an uplink signal in a frequency hopping mode in a plurality of uplink slots based on the frequency hopping pattern, the terminal device sends, based on the frequency hopping pattern, the uplink signal in a first frequency resource set of first $\left\lfloor N_{symb}^{PUSCH,s} / 2 \right\rfloor$ symbols allocated to a PUSCH in a first slot, where an index of a starting resource in the first frequency resource set is $RB_{start}$, and sends the uplink signal in a second frequency resource set of remaining $N_{symb}^{PUSCH,s} - \left\lfloor N_{symb}^{PUSCH,s} / 2 \right\rfloor$ symbols allocated to the PUSCH in the first slot, where an index of a starting resource in the second frequency resource set is $(RB_{start} + RB_{offset}) \bmod N_{BWP}^{size}$. The terminal device sends, based on the frequency hopping pattern, the uplink signal in a first frequency resource set of first $\left\lfloor N_{symb}^{PUSCH,s} / 2 \right\rfloor$ symbols allocated to the PUSCH in a second slot, where an index of a starting resource in the first frequency resource set is $RB_{start}$, and sends the uplink signal in a second frequency resource set of remaining $N_{symb}^{PUSCH,s} - \left\lfloor N_{symb}^{PUSCH,s} / 2 \right\rfloor$ symbols allocated to the PUSCH in the second slot, where an index of a starting resource in the second frequency resource set is $(RB_{start} + RB_{offset}) \bmod N_{BWP}^{size}$, and so on. Details are not described again.

(2) Inter-slot frequency hopping: Inter-slot frequency hopping is applied only to multi-slot PUSCH transmission. An inter-slot frequency hopping pattern is shown in the following formula:

$$RB_{start}(n_s^\mu) = \begin{cases} RB_{start} & n_s^\mu \bmod 2 = 0 \\ (RB_{start} + RB_{offset}) \bmod N_{BWP}^{size} & n_s^\mu \bmod 2 = 1 \end{cases},$$

where $n_s^\mu$ is a slot index of a current slot in a system frame (system radio frame), the current slot is a slot occupied by multi-slot PUSCH transmission, $RB_{start}$ indicates an index of a starting RB in the uplink BWP, $RB_{offset}$ indicates a frequency hopping interval between two frequency hops, and the frequency hopping interval is in units of RBs.

The PUSCH repetition type B supports two PUSCH frequency hopping modes: inter-repetition frequency hopping and inter-slot frequency hopping.

(1) Inter-repetition frequency hopping: A frequency hopping pattern of the inter-repetition frequency hopping is shown in the following formula:

$$RB_{start}(n) = \begin{cases} RB_{start} & n \bmod 2 = 0 \\ (RB_{start} + RB_{offset}) \bmod N_{BWP}^{size} & n \bmod 2 = 1 \end{cases},$$

where $RB_{start}$ indicates an index of a starting RB in the uplink BWP, $RB_{offset}$ indicates a frequency hopping interval between two frequency hops, the frequency hopping interval is in units of RBs, and n indicates an actual repetition (actual repetition) in an nth nominal repetition (nominal repetition).

(2) Inter-slot frequency hopping: The inter-slot frequency hopping is the same as that of the PUSCH repetition type A and the TBoMS PUSCH, and details are not described herein again.

It should be noted that the PDCCH does not support frequency hopping.

11. PUSCH frequency hopping parameter indication (that is, a method for determining $RB_{start}$ and $RB_{offset}$)

(1) The PUSCH is scheduled by DCI.

In this manner, $RB_{start}$ is indicated by a frequency domain resource assignment (Frequency domain resource assignment) field in the DCI. The DCI format 0_1 is used as an example. A length of the field is as follows:

(a) If the uplink resource allocation type 0 is used, that is, if RRC signaling resourceAllocation is configured as "resourceAllocationType0", the length of this field is $N_{RBC}$ bits.

(b) If the uplink resource allocation type 1 is used, that is, if RRC signaling resourceAllocation is configured as "resourceAllocationType1", the length of this field is $\left\lceil \log_2\left(N_{RB}^{UL,BWP} \times \left(N_{RB}^{UL,BWP}+1\right)/2\right)\right\rceil$ bits, where $N_{RB}^{UL,BWP}$ and $N_{BWP}^{size}$ have the same meaning, and both indicate a quantity of RBs included in one BWP, and $\lceil\ \rceil$ represents round-up.

(c) If a dynamic resource configuration is used, that is, if RRC signaling resourceAllocation is configured as "dynamicSwitch", the length of this field is $\max\left(\left\lceil \log_2\left(N_{RB}^{UL,BWP} \times \left(N_{RB}^{UL,BWP}+1\right)/2\right)\right\rceil, N_{RBG}\right)+1$ bits, where the MSB is used to indicate whether an uplink resource configuration type 0 or an uplink resource configuration 1 is used, where a bit value '0' indicates the uplink resource configuration type 0, and '1' indicates the uplink resource configuration type 1, or vice versa.

For the uplink resource allocation type 1, frequency resource allocation indicated by $\left\lceil \log_2\left(N_{RB}^{UL,BWP} \times \left(N_{RB}^{UL,BWP}+1\right)/2\right)\right\rceil$ LSBs is described as follows:

For frequency hopping: $N_{UL\_hop}$ MSB bits are used to indicate a frequency hopping interval $RB_{offset}$; if an RRC parameter frequencyHoppingOffsetLists includes only two frequency hopping interval values, $N_{UL\_hop}=1$; if four frequency hopping interval values are included, $N_{UL\_hop}=2$; and remaining $\left\lceil \log_2\left(N_{RB}^{UL,BWP} \times \left(N_{RB}^{UL,BWP}+1\right)/2\right)\right\rceil - N_{UL\_hop}$ bits are used to indicate a RIV of the PUSCH.

For non-frequency hopping: $\left\lceil \log_2\left(N_{RB}^{UL,BWP} \times \left(N_{RB}^{UL,BWP}+1\right)/2\right)\right\rceil$ bits are used to indicate the RIV.

(2) The PUSCH is scheduled by a RAR UL grant.

In this manner, only the uplink resource allocation type 1 is supported. $RB_{start}$ and $RB_{offset}$ are indicated by a frequency domain resource allocation field (PUSCH frequency resource allocation) in the RAR UL grant. Content of RAR UL grant information is shown in Table 2. A specific procedure is as follows:

If $N_{BWP}^{size} \leq 180$, or $N_{BWP}^{size} \leq 90$ for channel access in a shared spectrum, $\left\lceil \log_2\left(N_{BWP}^{size} \times \left(N_{BWP}^{size}+1\right)/2\right)\right\rceil$ LSB bits of the frequency domain resource allocation field (PUSCH frequency resource allocation) are truncated and interpreted as a frequency domain resource assignment (Frequency domain resource assignment) field in the DCI format 0_0. Otherwise, $N_{UL\_hop}$ bits are inserted after the frequency domain resource allocation field (PUSCH frequency resource allocation). If a frequency hopping flag (frequency hopping flag) is '0', that is, if frequency hopping is disabled, $N_{UL\_hop} = 0$; or if a frequency hopping flag (frequency hopping flag) is '1', that is, if frequency hopping is enabled, $N_{UL\_hop} = 1$. Then, after the inserted $N_{UL\_hop}$ bits, $\left\lceil \log_2 \left( N_{BWP}^{size} \times \left( N_{BWP}^{size} + 1 \right)/2 \right) \right\rceil - 14$ MSB bits with a bit value of '0' are inserted, or

$\left\lceil \log_2 \left( N_{BWP}^{size} \times \left( N_{BWP}^{size} + 1 \right)/2 \right) \right\rceil - 12$ MSB bits with a bit value of '0' are inserted for channel access in the shared spectrum.

## 12. PUCCH frequency hopping

### (1) During random access

If $\left\lfloor r_{PUCCH}/8 \right\rfloor = 0$, and the UE configures a PUCCH resource (PUCCH resource) according to RRC signaling pucch-ResourceCommon, and useInterlacePUCCH-PUSCH is not configured in RRC signaling BWP-UplinkCommon, the UE determines that an index of a starting PRB of a PUCCH in a first frequency hop is

$RB_{UL\,subband}^{offset} \times N_{RB} + \left\lfloor r_{PUCCH}/N_{CS} \right\rfloor \times N_{RB}$, and that an index of a starting PRB of the PUCCH in a second frequency hop is $N_{BWP}^{size} - RB_{BWP}^{offset} \times N_{RB} - \left( 1 + \left\lfloor r_{PUCCH}/N_{CS} \right\rfloor \right) \times N_{RB}$, where $N_{RB}$ represents a quantity of RBs of a PUCCH configured by using RRC signaling pucch-ResourceCommon within a frequency range FR2-2 defined by the 3rd Generation Partnership Project (3rd Generation Partnership Project, 3GPP). Within other frequency ranges, for example, FR1 and FR2-1, $N_{RB} = 1$. $RB_{BWP}^{offset}$ is an offset value of a frequency resource, $N_{CS}$ is a total quantity of initial cyclic shift indexes in an initial cyclic shift index set, the initial cyclic shift index set is shown in Table 1, $r_{PUCCH}$ is a PUCCH resource (resource) index, the PUCCH resource indicates a plurality of sets of frequency hopping parameters of the PUCCH, and one PUCCH resource index corresponds to one set of parameters.

Table 1

| Index | PUCCH format | First symbol | Quantity of symbols | PRB offset $RB_{BWP}^{offset}$ | Initial cyclic shift index set |
|-------|--------------|--------------|---------------------|--------------------------------|-------------------------------|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |

(continued)

| Index | PUCCH format | First symbol | Quantity of symbols | PRB offset $RB_{BWP}^{offset}$ | Initial cyclic shift index set |
|-------|--------------|--------------|---------------------|-------------------------------|--------------------------------|
| 15 | 1 | 0 | 14 | $N_{BWP}^{size}/4$ | {0, 3, 6, 9} |

If $\left\lfloor r_{PUCCH}/8 \right\rfloor = 1$, and the UE configures a PUCCH resource according to RRC signaling pucch-Resource-Common, and useInterlacePUCCH-PUSCH is not configured in RRC signaling BWP-UplinkCommon, the UE determines that an index of a starting PRB of a PUCCH in a second frequency hop is

$$RB_{BWP}^{offset} \times N_{RB} + \left\lfloor (r_{PUCCH}-8)/N_{CS} \right\rfloor \times N_{RB}$$, and that an index of a starting PRB of the PUCCH in a second frequency hop is $N_{BWP}^{size} - RB_{BWP}^{offset} \times N_{RB} - \left(1 + \left\lfloor (r_{PUCCH}-8)/N_{CS} \right\rfloor\right) \times N_{RB}$.

(2) After random access

By using interslotFrequencyHopping, the UE is configured whether to perform frequency hopping for repeated PUCCH transmission in different slots.

If the UE is configured to repeatedly perform inter-slot frequency hopping on the PUCCH, and PUCCH-DMRS-Bundling = 'enabled' is not provided for the UE, that is, if a demodulation reference signal (demodulation reference signal, DMRS) bundling function (or joint channel estimation (joint channel estimation) function) is not enabled, the UE performs frequency hopping once per slot, and the PUCCH transmitted by the UE in an even slot starts from a first PRB indicated by startingPRB, and the PUCCH transmitted by the UE in an odd slot starts from a second PRB indicated by secondHopPRB. A number of a slot in which a first repetition of the PUCCH transmission is located is 0, and subsequent slots are sequentially counted until the UE transmits the PUCCH in an $N_{PUCCH}^{repeat}$ th slot. Regardless of whether the UE transmits the PUCCH in a slot, the slot is counted. In this case, the UE does not expect to be configured to perform intra-slot frequency hopping on the PUCCH.

If the UE is configured to repeatedly perform inter-slot frequency hopping on the PUCCH, and PUCCH-DMRS-Bundling = 'enabled' is provided for the UE, even if the DMRS bundling function (or JCE function) is enabled, the UE performs frequency hopping between intervals of every $N_{PUCCH}^{interval}$ consecutive slots starting from a slot indicated to the UE, and the UE transmits the first repetition of the PUCCH in the indicated slot, where if PUCCH-Frequencyhop-Interval is provided, $N_{PUCCH}^{interval}$ is a value of PUCCH-Frequencyhop-Interval; otherwise, $N_{PUCCH}^{interval}$ is a value of PUCCH-Time-DomainWindowLength. The UE transmits the PUCCH in the interval until the UE transmits the PUCCH in $N_{PUCCH}^{repeat}$ slots, where a first interval is numbered 0, and subsequent intervals are sequentially counted. Each interval is counted regardless of whether the UE transmits the PUCCH in the slot. The PUCCH transmitted by the UE in an even interval starts from the first PRB indicated by startingPRB, and the PUCCH transmitted by the UE in an odd interval starts from a second PRB indicated by secondHopPRB. In this case, the UE does not expect to be configured to perform intra-slot frequency hopping on the PUCCH.

If the UE is not configured to repeatedly perform inter-slot frequency hopping on the PUCCH, and the UE is configured to repeatedly perform intra-slot frequency hopping on the PUCCH, a frequency hopping pattern between the first PRB and the second PRB is the same in each slot. The startingPRB and secondHopPRB are configured in RRC signaling PUCCH-Resource.

For example, when a terminal device sends a first signal in a frequency hopping mode in a plurality of SBFD slots, because a frequency range of an uplink subband in an SBFD slot is narrower than a range of a BWP of an uplink slot, the terminal device may be caused to hop out of the range of the uplink subband in the SBFD slot when the terminal device performs PUSCH frequency hopping based on a frequency hopping pattern corresponding to an existing uplink slot.

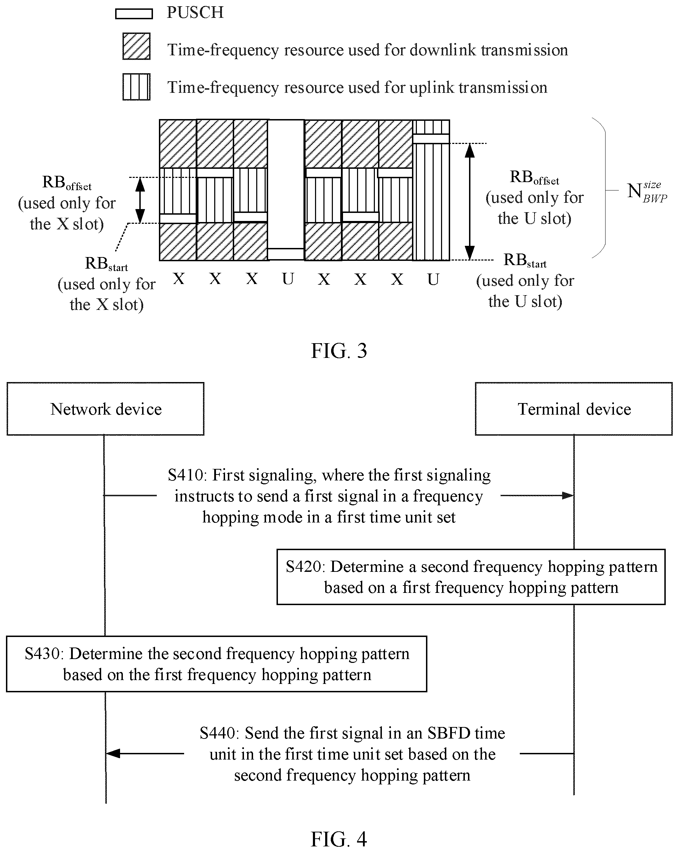

One solution is to configure two sets of independent frequency hopping patterns (that is, two groups of frequency hopping starting positions RBstart and frequency hopping intervals RBoffset), where one group indicates a frequency hopping pattern of a PUSCH in an SBFD slot, and the other group indicates a frequency hopping pattern of the PUSCH in an uplink slot. For example, in the method, in an X slot (that is, an SBFD slot) in FIG. 3, a PUSCH resource is determined in the X slot based on a frequency hopping pattern used only for the X slot, and uplink information is sent on the determined PUSCH; and in a U slot in FIG. 3, a PUSCH resource is determined in the U slot based on a frequency hopping pattern used only for the U slot, and uplink information is sent on the determined PUSCH. Similarly, if a first signal is carried on a PUCCH, a solution is to configure two sets of startingPRB and secondHopPRB as a frequency hopping pattern of the PUCCH in the SBFD slot and a frequency hopping pattern of the PUCCH in the uplink slot respectively. This method is easy to implement, but signaling overheads are increased.

In view of this, this application provides an uplink transmission method to effectively resolve the foregoing technical problem. The following describes in detail the method provided in this application.

FIG. 4 is a schematic flowchart of an uplink transmission method according to this application. The method includes the following steps.

S410: A network device sends first signaling to a terminal device. The first signaling indicates the terminal device to send a first signal in a frequency hopping mode in a first time unit set, the first signal is carried on a first PUSCH or a first PUCCH, and the first time unit set includes an SBFD time unit. Correspondingly, the terminal device receives the first signaling from the network device.

Optionally, the first time unit set may include only an SBFD time unit, or the first time unit set may include an uplink time unit and an SBFD time unit. A quantity of SBFD time units and a quantity of uplink time units in the first time unit set are not limited in this application. In other words, the first time unit set may include L uplink time units and M SBFD time units, where L is a natural number, and M is a positive integer.

Optionally, the first signal is a PUSCH, and the PUSCH may be a single-slot PUSCH or a multi-slot PUSCH. For example, the single-slot PUSCH includes a PUSCH, a Msg 3 PUSCH, a Msg A PUSCH, or the like, and the multi-slot PUSCH includes a PUSCH repetition type A, a PUSCH repetition type B, a TBoMS PUSCH, a Msg3 PUSCH repetition, a Msg A PUSCH repetition, or the like.

Optionally, the first signal is a PUCCH, and the PUCCH may be a single-slot PUCCH or a multi-slot PUCCH (that is, a PUCCH repetition).

S420: The terminal device determines a second frequency hopping pattern based on a first frequency hopping pattern. The first frequency hopping pattern indicates positions of N different starting frequency resources for sending the first signal in the frequency hopping mode in at least two uplink time units, the second frequency hopping pattern indicates positions of N different starting frequency resources for sending the first signal in the frequency hopping mode in at least two SBFD time units, the positions of the starting frequency resources indicated by the second frequency hopping pattern are located in an uplink subband in the SBFD time unit, and N is an integer greater than or equal to 2.

For example, the frequency resource in this embodiment may be understood as an RB. In frequency domain, 12 subcarriers constitute one RB.

For example, in this embodiment, a position of a frequency resource may be indicated by using an index of the frequency resource.

That the first frequency hopping pattern indicates positions of N different starting frequency resources for sending the first signal in the frequency hopping mode in at least two uplink time units may be understood as: the first frequency hopping pattern indicates that the first signal is sent on an $n^{th}$ frequency resource in an $m^{th}$ uplink time unit, the $m^{th}$ uplink time unit is one of the at least two uplink time units, and a starting position of the $n^{th}$ frequency resource is a position of one of the N different starting frequency resources. A position of a starting frequency resource may be uniquely determined from the positions of the N different starting frequency resources based on the first frequency hopping pattern and an index of the uplink time unit. For example, inter-slot frequency hopping is used as an example, N = 2, and the first frequency hopping pattern is:

$$RB_{start}(i) = \begin{cases} RB_{start} & i = 0 \\ (RB_{start} + RB_{offset}) \bmod N_{BWP}^{size} & i = 1 \end{cases}.$$

For meanings of parameters in the pattern, refer to the foregoing descriptions. Details are not described herein again.

Similarly, that the second frequency hopping pattern indicates positions of N different starting frequency resources for sending the first signal in the frequency hopping mode in at least two SBFD time units may also be understood in a similar way. Details are not described herein again. It should be understood that if the first signal is carried on the PUSCH, the first frequency hopping pattern and the second frequency hopping pattern are frequency hopping patterns of the PUSCH. If the first signal is carried on the PUCCH, the first frequency hopping pattern and the second frequency hopping pattern are frequency hopping patterns of the PUCCH.

It should be further understood that the first frequency hopping pattern is determined based on the frequency hopping mode for sending the first signal, and frequency hopping modes of the first frequency hopping pattern and the second frequency hopping pattern are the same. For example, the frequency hopping mode may be intra-slot frequency hopping, inter-slot frequency hopping, inter-repetition frequency hopping, or inter-slot-group frequency hopping. For example, when N = 2, the first signal is carried on the PUSCH. For the first frequency hopping pattern, refer to the foregoing descriptions of frequency hopping patterns corresponding to PUSH frequency hopping in different frequency hopping modes.

It should be further understood that, in different frequency hopping modes, definitions of the time unit in this embodiment are different. Specifically, for inter-slot frequency hopping, the time unit is a slot; for inter-slot-group frequency hopping, the time unit is a slot set; for intra-slot frequency hopping, the time unit is a symbol or a symbol set included in each hop; and for inter-repetition frequency hopping, the time unit is a symbol set in which each nominal repetition is located.

Optionally, the frequency hopping mode of the first signal is predefined, or is indicated by the first signaling.

The following provides several possible implementations in which the terminal device determines the second frequency hopping pattern.

Manner 1: modulo operation (that is, remainder operation) manner

The terminal device determines the second frequency hopping pattern based on $RB_{start,j} \, mod \, N_{UL\,subband}^{size}$, where $RB_{start,j}$ is an index of a $j^{th}$ ($1 \le j \le N$) starting frequency resource of the N starting frequency resources in the first frequency hopping pattern, and $N_{UL\,subband}^{size}$ is a quantity of frequency resources of the uplink subband in the SBFD time unit.

In an implementation, the second frequency hopping pattern determined in the manner 1 is shown as follows, where $RB'_{start,j}$ is an index of a $j^{th}$ starting frequency resource of the N starting frequency resources in the second frequency hopping pattern, and $RB'_{start,j}$ meets the following formula:

$$RB'_{start,j} = RB_{start,j} \, mod \, N_{UL\,subband}^{size} + RB_{UL\,subband}^{start},$$

where $RB_{UL\,subband}^{start}$ is an index of a starting frequency resource of the uplink subband in the SBFD time unit. It can be learned that in this manner, because a value range of $RB_{start,j} \, mod \, N_{UL\,subband}^{size}$ is greater than or equal to 0 and less than $N_{UL\,subband}^{size}$, $RB'_{start,j}$ is always located in the uplink subband in SBFD.

Manner 2: scaling operation manner

The terminal device determines the second frequency hopping pattern based on a first scaling parameter $\alpha$ and $RB_{start,j}$, where $RB_{start,j}$ is an index of a $j^{th}$ starting frequency resource of the N starting frequencies in the first frequency hopping pattern, and $\alpha$ is greater than 0 and less than 1.

In an implementation, the second frequency hopping pattern determined in the manner 2 is shown as follows, where $RB'_{start,j}$ is an index of a $j^{th}$ ($1 \le j \le N$) starting frequency resource of the N starting frequency resources in the second frequency hopping pattern, and $RB'_{start,j}$ meets the following formula:

$$RB'_{start,j} = [RB_{start,j} \times \alpha] + RB_{UL\,subband}^{start},$$

where [ ] may be round-up, round-down, or round-off, and $RB_{UL\,subband}^{start}$ is an index of a starting frequency resource of the uplink subband in the SBFD time unit.

For example, $\alpha = N_{UL\,subband}^{size} / N_{BWP}^{size}$, where $N_{BWP}^{size}$ is a quantity of RBs included in a BWP allocated by the network device to the terminal device, the uplink subband is included in the BWP, and $N_{UL\,subband}^{size}$ is a quantity of frequency resources of the uplink subband in the SBFD time unit.

For example, $\alpha$ is semi-statically configured by the network device by using SIB1 or RRC, where $0 < \alpha < 1$.

For example, the network device semi-statically indicates, by using the SIB1 or the RRC, the terminal device to select one $\alpha$ from a candidate value table. For example, the candidate value table may be {0.1, 0.2, 0.3, ..., 0.9}.

It should be understood that the manner 1 and the manner 2 may be used to determine the second frequency hopping pattern of the PUSCH, and the second frequency hopping pattern of the PUCCH during initial access and the second frequency hopping pattern of the PUCCH after initial access.

Manner 3: fixed position manner

It may be understood that the manner 1 and the manner 2 may be considered as determining the second frequency hopping pattern by the terminal device based on the first frequency hopping pattern. However, the manner 3 directly defines the positions of the N starting frequency resources in the second frequency hopping pattern. The following uses N = 2 as an example to provide the second frequency hopping pattern corresponding to PUSCH frequency hopping and PUCCH frequency hopping.

In an implementation, when the first signal is carried on the first PUSCH, an index of a frequency hopping starting frequency in the second frequency hopping pattern is $RB_{UL\,subband}^{start}$, $RB_{UL\,subband}^{start}$ is an index of a starting frequency resource of the uplink subband in the SBFD time unit, and an index of another frequency hopping starting frequency resource in the second frequency hopping pattern is $RB_{UL\,subband}^{start} + N_{UL\,subband}^{size} - L_{RBs}$, where $N_{UL\,subband}^{size}$ is a quantity of frequency resources of the uplink subband in the SBFD time unit, and $L_{RBs}$ is a quantity of frequency resources allocated to one PUSCH.

For example, if the frequency hopping mode is intra-slot frequency hopping, the second frequency hopping pattern may be:

$$RB'_{start}(i) = \begin{cases} RB_{UL\,subband}^{start} & i = 0 \\ RB_{UL\,subband}^{start} + N_{UL\,subband}^{size} - L_{RBs} & i = 1 \end{cases}$$

or

$$RB'_{start}(i) = \begin{cases} RB_{UL\,subband}^{start} + gap & i = 0 \\ RB_{UL\,subband}^{start} + N_{UL\,subband}^{size} - L_{RBs} - gap & i = 1 \end{cases}$$

or

$$RB'_{start}(i) = \begin{cases} RB_{UL\,subband}^{start} + gap + offset & i = 0 \\ RB_{UL\,subband}^{start} + N_{UL\,subband}^{size} - L_{RBs} - gap + offset & i = 1 \end{cases}.$$

Values of the gap and the offset are predefined or preconfigured. This is not limited in this application.

In another implementation, when the first signal is carried on the first PUCCH, for the PUCCH during initial access, an index of a frequency hopping starting frequency in the second frequency hopping pattern is an index of a starting frequency resource of the uplink subband in the SBFD time unit plus a first offset value, and an index of another frequency hopping starting frequency in the second frequency hopping pattern is an index of an ending frequency resource of the uplink subband in the SBFD time unit minus the first offset value, where the first offset value is determined based on at least one of the following parameters: an offset value $RB_{UL\,subband}^{offset}$ of a frequency resource, a total quantity $N_{CS}$ of initial cyclic shift indexes in an initial cyclic shift index set, and a PUCCH resource index $r_{PUCCH}$.

It should be understood that the offset value $RB_{UL\,subband}^{offset}$ of the frequency resource and the total quantity $N_{CS}$ of initial cyclic shift indexes in the initial cyclic shift index set herein are indicated by the network device. For example, Table 2 is newly defined. Table 2 may be considered as a table obtained after $RB_{BWP}^{offset}$ in Table 1 is replaced with $RB_{UL\,subband}^{offset}$ and $N_{BWP}^{size}/4$ in a last row in Table 1 is replaced with $N_{UL\,subband}^{size}$. The network device indicates an index value in Table 2. The terminal device determines one $RB_{UL\,subband}^{offset}$ and $N_{CS}$ in Table 2 based on the index value. $N_{UL\,subband}^{size}$ is a quantity of frequency resources of the uplink subband in the SBFD time unit.

Table 2

| Index | PUCCH format | First symbol | Quantity of symbols | PRB offset $RB_{UL\,subband}^{offset}$ | Initial cyclic shift index set |
|-------|-------------|-------------|---------------------|----------------------------------------|-------------------------------|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $N_{UL\,subband}^{size}/4$ | {0, 3, 6, 9} |

For example, in this implementation, when $\lfloor r_{PUCCH}/8 \rfloor=0$, the first offset value is $RB_{UL\,subband}^{offset}+\lfloor r_{PUCCH}/N_{CS} \rfloor$, or when $\lfloor r_{PUCCH}/8 \rfloor=1$, the first offset value is $RB_{UL\,subband}^{offset}+\lfloor (r_{PUCCH}-8)/N_{CS} \rfloor$. $\lfloor \rfloor$ represents round-down.

Specifically, when $\lfloor r_{PUCCH}/8 \rfloor=0$, an index of a frequency hopping starting frequency in the second frequency hopping pattern is $RB_{UL\,subband}^{offset}+\lfloor r_{PUCCH}/N_{CS} \rfloor+RB_{UL\,subband}^{start}$, and an index of another frequency hopping starting frequency in the second frequency hopping pattern is $N_{UL\,subband}^{size}+RB_{UL\,subband}^{start}-RB_{UL\,subband}^{offset}-\left(1+\lfloor r_{PUCCH}/N_{CS} \rfloor\right)$. When $\lfloor r_{PUCCH}/8 \rfloor=1$, an index of a frequency hopping starting frequency in the second frequency hopping pattern is $N_{UL\,subband}^{size}+RB_{UL\,subband}^{start}-RB_{UL\,subband}^{offset}-\left(1+\lfloor (r_{PUCCH}-8)/N_{CS} \rfloor\right)$, and an index of another frequency hopping starting frequency in the second frequency hopping pattern is $RB_{UL\,subband}^{offset} + \left\lfloor (r_{PUCCH} - 8) / N_{CS} \right\rfloor + RB_{ULsubband}^{start}$ .

In still another implementation, when the first signal is carried on the first PUCCH, when $\left\lfloor r_{PUCCH} / 8 \right\rfloor = 0$ , an index of a frequency hopping starting frequency in the second frequency hopping pattern is $RB_{UL\,subband}^{offset} \times N_{RB} + \left\lfloor r_{PUCCH} / N_{CS} \right\rfloor \times N_{RB} + RB_{UL\,subband}^{start}$ , and an index of another frequency hopping starting frequency in the second frequency hopping pattern is $N_{UL\,subband}^{size} + RB_{UL\,subband}^{start} - RB_{UL\,subband}^{offset} \times N_{RB} - \left(1 + \left\lfloor r_{PUCCH} / N_{CS} \right\rfloor\right) \times N_{RB}$ . When $\left\lfloor r_{PUCCH} / 8 \right\rfloor = 1$ , an index of a frequency hopping starting frequency in the second frequency hopping pattern is $N_{UL\,subband}^{size} + RB_{UL\,subband}^{start} - RB_{UL\,subband}^{offset} \times N_{RB} - \left(1 + \left\lfloor (r_{PUCCH} - 8) / N_{CS} \right\rfloor\right) \times N_{RB}$ , and an index of another frequency hopping starting frequency in the second frequency hopping pattern is $RB_{UL\,subband}^{offset} \times N_{RB} + \left\lfloor (r_{PUCCH} - 8) / N_{CS} \right\rfloor \times N_{RB} + RB_{ULsubband}^{start}$ , where $N_{RB}$ represents a quantity of RBs of a PUCCH configured by using RRC signaling pucch-ResourceCommon within a frequency range FR2-2 defined by the 3GPP, and $N_{RB}$ is an integer greater than 1. Within other frequency ranges, for example, FR1 and FR2-1, $N_{RB}$ = 1.

S430: The network device determines the second frequency hopping pattern based on the first frequency hopping pattern.

It should be understood that the network device and the terminal device determine the same second frequency hopping pattern in the same manner, to ensure that the network device can correctly receive, on a frequency domain resource, the first signal sent by the terminal device.

S440: The terminal device sends the first signal in the SBFD time unit in the first time unit set to the network device based on the second frequency hopping pattern. Correspondingly, the network device receives the first signal in the SBFD time unit in the first time unit set based on the second frequency hopping pattern.

Optionally, if the first time unit set further includes an uplink time unit, the terminal device sends the first signal to the network device in the uplink time unit in the first time unit set based on the first frequency hopping pattern. Correspondingly, the network device receives the first signal in the uplink time unit in the first time unit set based on the first frequency hopping pattern.

It should be understood that when the first time unit set includes P types of SBFD time units, positions of uplink subbands of the P types of SBFD time units are different, where P is an integer greater than 1. In this case, the terminal device may determine P second frequency hopping patterns based on the P types of SBFD time units, where the P types of SBFD time units are in a one-to-one correspondence with the P second frequency hopping patterns.

It can be learned that, in the foregoing solution, the second frequency hopping pattern is not directly configured for sending in the frequency hopping mode in the SBFD time unit, but a new rule is introduced based on an existing frequency hopping pattern (that is, the first frequency hopping pattern) of the uplink time unit, to map the N starting frequency resources in the first frequency hopping pattern to the uplink subband in SBFD, so that the N starting frequency resources in the corresponding second frequency hopping pattern are obtained and that the first signal is sent in the frequency hopping mode in the SBFD time unit and the uplink time unit. This method can not only ensure that frequency hopping in an SBFD slot does not exceed a range of the uplink subband, but also reduce signaling overheads compared with the conventional technology in which two sets of frequency hopping patterns are configured.

In addition, in the SBFD time unit, for a frequency domain subband division manner of {DUD} (referring to a subband division manner of an SBFD slot in FIG. 2), a downlink resource allocation type 0 may implement discontinuous PDSCH frequency resource allocation, but can implement only frequency resource allocation at an RBG granularity. Therefore, a guard bandwidth (Guard band) needs to occupy at least one RBG, causing a severe resource waste. A downlink resource allocation type 1 can implement frequency resource allocation at an RB granularity, but the frequency resource allocation needs to be continuous. Consequently, it is difficult to separately indicate PDSCH frequency resources in two discontinuous downlink subbands in an SBFD time unit, and a severe resource waste is also caused.

In view of this, this application provides a downlink transmission method to effectively resolve the foregoing technical problem. The following describes in detail the method provided in this application.

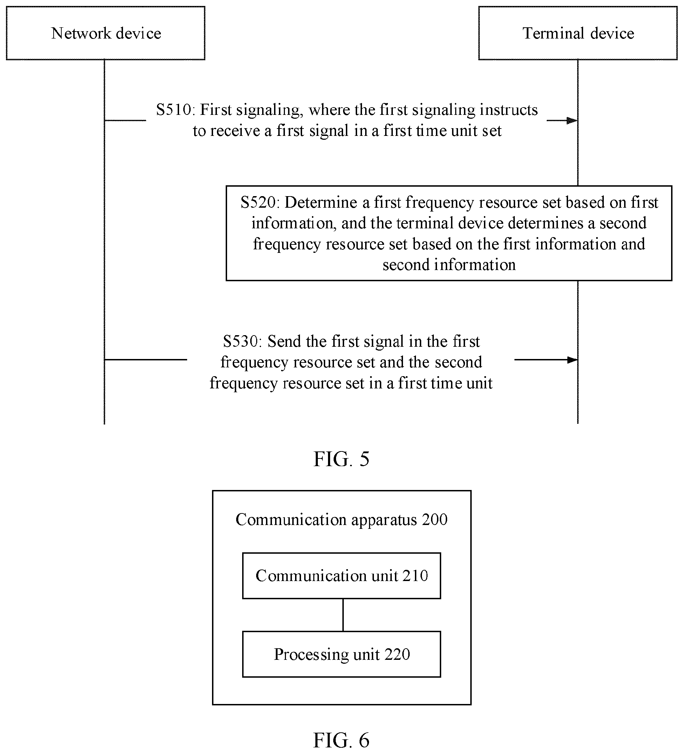

FIG. 5 is a schematic flowchart of a downlink transmission method according to this application. The method includes the following steps.

S510: A network device sends first signaling to a terminal device. The first signaling indicates the terminal device to receive a first signal in a first time unit set, the first signaling includes first information and second information, the first information indicates a position of a starting frequency resource in a first frequency resource set and a quantity $L_{RBs}$ of frequency resources included in the first frequency resource set, the second information indicates a spacing $RB_{offset}$ between the starting frequency resource in the first frequency resource set and a starting frequency resource in a second frequency resource set, the first signal is carried on a first PDSCH, the first time unit set includes a first time unit, and the first time unit is an SBFD time unit including at least two downlink subbands.

It should be understood that any two of the at least two downlink subbands are respectively located on two sides of an uplink subband and/or a guard band of the SBFD time unit.

For example, in this embodiment, a position of a starting frequency resource may be indicated by using an index of the starting frequency resource.

For example, the frequency resource in this embodiment may be understood as an RB, that is, $RB_{offset}$ is a spacing between starting RBs of two frequency resource sets.

Optionally, the first signaling is DCI. A frequency domain resource assignment (Frequency domain resource assignment) field in the DCI indicates the first information and the second information.

Optionally, the second information may indicate one of a plurality of $RB_{offset}$ candidate values or an index corresponding to one value.

Optionally, the plurality of $RB_{offset}$ candidate values may be configured by the network device by using RRC signaling or other signaling. This is not specifically limited in this application. For example, the network device may add a field frequencyOffset to PDSCH-Config of the RRC signaling to indicate $2^x$ $RB_{offset}$ candidate values, where x is a positive integer. For example, if x = 1, two $RB_{offset}$ candidate values are configured for frequencyOffset; or if x = 2, four $RB_{offset}$ candidate values are configured for frequencyOffset.

In this case, in a possible implementation, the frequency domain resource assignment field in the first signaling DCI has a total of $\left\lceil log_2 \left( N_{RB}^{UL,BWP} \left( N_{RB}^{UL,BWP} + 1 \right) / 2 \right) \right\rceil$ bits, where most significant x bits of the field are the second information and indicate an index of $RB_{offset}$ that needs to be used in the $2^x$ $RB_{offset}$ candidate values configured by using the RRC signaling, and remaining bits of the field are the first information and indicate a RIV. Specifically, if two $RB_{offset}$ candidate values (that is, x = 1) are configured for frequencyOffset, the most significant one bit (that is, the second information) of the frequency domain resource assignment field indicates the index of $RB_{offset}$ that needs to be used in the two $RB_{offset}$ candidate values, and remaining bits of the field are the first information and indicate the RIV. For example, if four $RB_{offset}$ candidate values (that is, x = 2) are configured for frequencyOffset, the most significant two bits (that is, the second information) of the frequency domain resource assignment field indicate the index of $RB_{offset}$ that needs to be used in the four $RB_{offset}$ candidate values, and remaining bits of the field are the first information and indicate the RIV.

Optionally, the second information may be further configured as a spacing between an ending frequency resource in the first frequency resource set and an ending frequency resource in the second frequency resource set, or a spacing between a starting frequency resource in the first frequency resource set and an ending frequency resource in the second frequency resource set, or a spacing between an ending frequency resource in the first frequency resource set and a starting frequency resource in the second frequency resource set. This is not limited in this application.

S520: The terminal device determines the first frequency resource set based on the first information, and the terminal device determines the second frequency resource set based on the first information and the second information. Frequency resources in both the first frequency resource set and the second frequency resource set are continuous.

An index of the starting frequency resource in the second frequency resource set is $RB_{start} + RB_{offset}$, where $RB_{start}$ is the index of the starting frequency resource in the first frequency resource set indicated by the first information. A quantity of frequency resources included in the second frequency resource set (that is, a length of the second frequency resource set) is the same as the quantity $L_{RBs}$ of frequency resources included in the first frequency resource set (that is, a length of the first frequency resource set), or a quantity of frequency resources included in the second frequency resource set is predefined or preconfigured.

For example, Length of the second frequency resource set = Length of the first frequency resource set x $\alpha$, where $\alpha$ = Quantity of frequency domain resources included in a downlink subband in which the second frequency resource set is located/Quantity of frequency domain resources included in a downlink subband in which the first frequency resource set is located. A manner of calculating $\alpha$ may be predefined, or may be indicated by the network device.

For example, $\alpha$ is a value indicated by the network device.

For example, the network device configures a candidate value set of $\alpha$, and the terminal device selects a value from the candidate value set. Alternatively, the network device selects a value from a preset candidate value set, and sends the value to the terminal device. Alternatively, the network device selects a value from a preset candidate value set as a value of $\alpha$, and sends an index of the value in the candidate value set to the terminal device, and the terminal device selects a corresponding value from the candidate value set as the value of $\alpha$ based on the received index. For example, the candidate value set of $\alpha$ is {0.1, 0.2, ..., 1, 2, 3, ...}.

S530: The network device sends the first signal to the terminal device in the first frequency resource set and the second frequency resource set in the first time unit. Correspondingly, the terminal device receives the first signal from the network device in the first frequency resource set and the second frequency resource set in the first time unit.

It can be learned that, in comparison with an existing resource allocation type 1, in the foregoing technical solution, the indication of the second information is added to the first signaling, so that PDSCH frequency resource allocation at an RB granularity can be implemented in two non-adjacent downlink subbands in the SBFD time unit, thereby improving SBFD resource utilization. In addition, compared with a resource allocation type 0, in this method, a case in which a guard bandwidth needs to occupy at least one RBG does not occur, and more frequency resources can be used.

It should be understood that, in the conventional technology, resourceAllocation in RRC signaling is used to indicate a PDSCH frequency resource allocation type, that is, indicate a terminal device to determine a frequency resource of a PDSCH in a downlink BWP by using the resource allocation type 0, the resource allocation type 1, or a dynamic resource allocation type. Therefore, the resource allocation manner provided in FIG. 5 may also be considered as a new resource allocation type. For ease of description, this resource allocation type is referred to as a resource allocation type 2 in this application.

It may be understood that when the first time unit set includes only one time unit type (that is, the first time unit includes only a downlink time unit, or the first time unit set includes only an SBFD time unit), the network device may determine, based on a time unit type of the time unit included in the first time unit set, whether the first signaling includes the second information. Similarly, the terminal device also determines, based on the determined time unit type of the time unit in the first time unit set, how to read the first signaling. In addition, the network device further needs to indicate the PDSCH frequency resource allocation type by using another piece of signaling. The resource allocation type may be a non-dynamic resource configuration type such as the resource allocation type 0 or 1, or may be a dynamic resource allocation type. For ease of description, the another piece of signaling is referred to as second signaling in this application. For example, the first signaling is the DCI, and the second signaling may be RRC signaling.

For example, the first time unit set may include a plurality of time units, or may include only one time unit.

It should be understood that a determining criterion for the network device to determine whether to configure the second information is the same as a determining criterion for the terminal device to determine whether the first signaling includes the second information. For ease of description, interpretation of the first signaling in different scenarios is described herein only from a perspective of the terminal device.

The following describes in detail a manner in which the terminal device interprets the first signaling in different scenarios, and a method for determining a frequency resource for receiving the first signal. It should be understood that the SBFD time unit in the following scenario description is an SBFD time unit including at least two downlink subbands.

Scenario 1

① The terminal device receives second signaling from the network device, where the second signaling indicates the terminal device to determine PDSCH frequency resource allocation by using the resource allocation type 2.
② The terminal device determines, based on the second signaling, that the first signaling includes the first information and the second information, and determines the first frequency resource set and the second frequency resource set based on the first signaling.

In other words, in this scenario, the terminal device does not need to pay attention to the time unit type of the time unit in the first time unit set. Regardless of whether the first time unit set includes only the SBFD time unit or includes only the downlink time unit, when the terminal device receives the second signaling, the terminal device considers that the first signaling includes the second information.

For descriptions of the first information and the second information and descriptions of determining, by the terminal device, the first frequency resource set and the second frequency resource set based on the first information and the second information, refer to the descriptions in S510 and S520. Details are not described herein again. These descriptions are not repeated in other scenarios.

③ The terminal device receives the first signal in the first frequency resource set and the second frequency resource set in the first time unit set.

Scenario 2

① The terminal device receives second signaling from the network device, where the second signaling indicates the terminal device to perform PDSCH frequency resource allocation by using a first dynamic resource allocation type.

It should be understood that the first dynamic resource allocation type indicates that the first signaling includes one piece of third information, where the third information indicates the resource allocation type 0 or the resource allocation type 2. In other words, in this scenario, use of the resource allocation type 0 or the resource allocation type 2 may be dynamically indicated.

For example, the first signaling is the DCI, and the first signaling includes the frequency domain resource assignment field with a total of $\max\left(\left\lceil log_2\left(N_{RB}^{UL,BWP}\times\left(N_{RB}^{UL,BWP}+1\right)/2\right)\right\rceil, N_{RBG}\right)+1$ bits. The most significant one bit (that is, an example of the third information) indicates whether the resource allocation type 0 in the conventional technology or the resource allocation type 2 proposed in this application is used. For example, when the most significant one bit is '0', the frequency resource allocation type 0 in the conventional technology is used, or when the most significant one bit is '1', the resource allocation type 2 is used, and vice versa. When dynamic resource allocation is used in the following scenario, the third information in the first signaling may be the most significant one bit of the frequency domain resource assignment field, and is used to indicate different resource allocation types. Details are not described again later.

② The terminal device determines, based on the second signaling, that the first signaling includes the third information, where the third information indicates the resource allocation type 0 or the resource allocation type 2.

When the third information indicates the resource allocation type 0, understanding of the first signaling by the terminal device is the same as that in the conventional technology. Refer to the foregoing descriptions.

When the third information indicates the resource allocation type 2, the terminal device determines that the first signaling further includes the first information and the second information, and determines the first frequency resource set and the second frequency resource set based on the first signaling. In other words, when the third information indicates the resource allocation type 2, the terminal device does not need to pay attention to the time unit type of the time unit in the first time unit set. Regardless of whether the first time unit set includes only the SBFD time unit or includes only the downlink time unit, the terminal device considers that the first signaling further includes the first information and the second information. Then the terminal device receives the first signal in the first frequency resource set and the second frequency resource set in the first time unit set.

Scenario 3

① The terminal device receives second signaling from the network device, where the second signaling indicates the terminal device to determine PDSCH frequency resource allocation by using a second dynamic resource allocation type.
It should be understood that the second dynamic resource allocation type indicates that the first signaling includes one piece of third information, where the third information indicates the resource allocation type 1 or the resource allocation type 2. In other words, in this scenario, use of the resource allocation type 1 or the resource allocation type 2 may be dynamically indicated.
② The terminal device determines, based on the second signaling, that the first signaling includes the third information, where the third information indicates the resource allocation type 1 or the resource allocation type 2.

When the third information indicates the resource allocation type 1, understanding of the first signaling by the terminal device is the same as that in the conventional technology. Refer to the foregoing descriptions.

When the third information indicates the resource allocation type 2, the terminal device determines that the first signaling further includes the first information and the second information, and determines the first frequency resource set and the second frequency resource set based on the first signaling. In other words, when the third information indicates the resource allocation type 2, the terminal device does not need to pay attention to the time unit type of the time unit in the first time unit set. Regardless of whether the first time unit set includes only the SBFD time unit or includes only the downlink time unit, the terminal device considers that the first signaling further includes the first information and the second information. Then the terminal device receives the first signal in the first frequency resource set and the second frequency resource set in the first time unit set.

Scenario 4

① The terminal device receives second signaling from the network device, where the second signaling indicates the terminal device to determine PDSCH frequency resource allocation by using the resource allocation type 1.
② The terminal device determines the first time unit set.

When the first time unit set includes only the downlink time unit, the terminal device determines that the first signaling includes the first information but does not include the second information. In other words, understanding of the first signaling by the terminal device is the same as that in the conventional technology. Refer to the foregoing descriptions.

When the first time unit set includes only the SBFD time unit, the terminal device determines that the first signaling includes the first information and the second information. Then the terminal device receives the first signal in the first frequency resource set and the second frequency resource set in the first time unit set.

It may be understood that, in this scenario, the terminal device interprets the first signaling based on different time unit types. When the first time unit set includes only the downlink time unit, the terminal device considers that the first signaling is configured according to the conventional technology. When the first time unit set includes only the SBFD time unit, the terminal device interprets the first signaling in a manner of the new resource allocation type 2 provided in this application.

Scenario 5

① The terminal device receives second signaling from the network device, where the second signaling indicates the terminal device to determine PDSCH frequency resource allocation by using a third dynamic resource allocation type. It should be understood that the third dynamic resource allocation type indicates that the first signaling includes one piece of third information, where the third information indicates the resource allocation type 0 or the resource allocation type 1. In other words, in this scenario, use of the resource allocation type 0 or the resource allocation type 1 may be dynamically indicated.
② The terminal device determines, based on the second signaling, that the first signaling includes the third information, where the third information indicates the resource allocation type 0 or the resource allocation type 1.

When the third information indicates the resource allocation type 0, understanding of the first signaling by the terminal device is the same as that in the conventional technology. Refer to the foregoing descriptions.

When the third information indicates the resource allocation type 1, the terminal device determines the first time unit set, interprets the first signaling based on different time unit types, and receives the first signal. Interpretation of the first signaling is the same as that described in the scenario 4, and details are not described herein again.

Scenario 6

① The terminal device receives second signaling from the network device, where the second signaling indicates the terminal device to determine PDSCH frequency resource allocation by using a resource allocation type 3.
② The terminal device determines, based on the second signaling, that the first signaling includes the first information and the second information, and determines the first frequency resource set and the second frequency resource set based on the first signaling.

In other words, in this scenario, the terminal device does not need to pay attention to the time unit type of the time unit in the first time unit set. Regardless of whether the first time unit set includes only the SBFD time unit or includes only the downlink time unit, when the terminal device receives the second signaling, the terminal device considers that the first signaling includes the first information and the second information.

When the first time unit set includes only the SBFD time unit, the terminal device receives the first signal in the first frequency resource set and the second frequency resource set in the first time unit set.

When the first time unit set includes only the downlink time unit, the terminal device receives the first signal in a third frequency resource set in the first time unit set, where a starting frequency resource in the third frequency resource set is a frequency resource with a smallest index among frequency resources in the first frequency resource set and the second frequency resource set, and an ending frequency resource in the third frequency resource set is a frequency resource with a largest index among the frequency resources in the first frequency resource set and the second frequency resource set. It should be understood that all frequency resources in the third frequency resource set are continuous.

Scenario 7

① The terminal device receives second signaling from the network device, where the second signaling indicates the terminal device to determine PDSCH frequency resource allocation by using a fourth dynamic resource allocation type.
It should be understood that the fourth dynamic resource allocation type indicates that the first signaling includes one piece of third information, where the third information indicates the resource allocation type 0 or the resource allocation type 3. In other words, in this scenario, use of the resource allocation type 0 or the resource allocation type 3 may be dynamically indicated.
② The terminal device determines, based on the second signaling, that the first signaling includes the third information, where the third information indicates the resource allocation type 0 or the resource allocation type 3.

When the third information indicates the resource allocation type 0, understanding of the first signaling by the terminal device is the same as that in the conventional technology. Refer to the foregoing descriptions.
When the third information indicates the resource allocation type 3, the terminal device determines, based on the second signaling, that the first signaling includes the first information and the second information, and determines the first frequency resource set and the second frequency resource set based on the first signaling, which is the same as the description in the scenario 6. Then, when the first time unit set includes only the SBFD time unit, the terminal device receives the first signal in the first frequency resource set and the second frequency resource set in the first time unit set; or when the first time unit set includes only the downlink time unit, the terminal device receives the first signal in the third frequency resource set in the first time unit set.

Scenario 8

① The terminal device receives second signaling from the network device, where the second signaling indicates the terminal device to determine PDSCH frequency resource allocation by using a fifth dynamic resource allocation type.
It should be understood that the fifth dynamic resource allocation type indicates that the first signaling includes one piece of third information, where the third information indicates the resource allocation type 1 or the resource allocation type 3. In other words, in this scenario, use of the resource allocation type 1 or the resource allocation type 3 may be dynamically indicated.
② The terminal device determines, based on the second signaling, that the first signaling includes the third information, where the third information indicates the resource allocation type 1 or the resource allocation type 3.

When the third information indicates the resource allocation type 1, understanding of the first signaling by the terminal device is the same as that in the conventional technology. Refer to the foregoing descriptions.
When the third information indicates the resource allocation type 3, the terminal device determines, based on the second signaling, that the first signaling includes the first information and the second information, and determines the first frequency resource set and the second frequency resource set based on the first signaling, which is the same as the description in the scenario 6. Then, when the first time unit set includes only the SBFD time unit, the terminal device receives the first signal in the first frequency resource set and the second frequency resource set in the first time unit set; or when the first time unit set includes only the downlink time unit, the terminal device receives the first signal in the third frequency resource set in the first time unit set.

Scenario 9

① The terminal device receives second signaling from the network device, where the second signaling indicates the terminal device to determine PDSCH frequency resource allocation by using a sixth dynamic resource allocation type.
It should be understood that the sixth dynamic resource allocation type indicates that the first signaling includes one piece of third information, where the third information indicates the resource allocation type 2 or the resource allocation type 3. In other words, in this scenario, use of the resource allocation type 2 or the resource allocation type 3 may be dynamically indicated.

② The terminal device determines, based on the second signaling, that the first signaling includes the third information, where the third information indicates the resource allocation type 2 or the resource allocation type 3.

When the third information indicates the resource allocation type 2, the terminal device determines that the first signaling includes the first information and the second information, and determines the first frequency resource set and the second frequency resource set based on the first signaling, which is the same as the description in the scenario 1. In other words, in this scenario, the terminal device does not need to pay attention to the time unit type of the time unit in the first time unit set. Regardless of whether the first time unit set includes only the SBFD time unit or includes only the downlink time unit, when the terminal device receives the second signaling, the terminal device considers that the first signaling further includes the first information and the second information. Then the terminal device receives the first signal in the first frequency resource set and the second frequency resource set in the first time unit set.

When the third information indicates the resource allocation type 3, the terminal device determines, based on the second signaling, that the first signaling includes the first information and the second information, and determines the first frequency resource set and the second frequency resource set based on the first signaling, which is the same as the description in the scenario 6. Then, when the first time unit set includes only the SBFD time unit, the terminal device receives the first signal in the first frequency resource set and the second frequency resource set in the first time unit set; or when the first time unit set includes only the downlink time unit, the terminal device receives the first signal in the third frequency resource set in the first time unit set.

Scenario 10

① The terminal device receives second signaling from the network device, where the second signaling indicates the terminal device to determine PDSCH frequency resource allocation by using a seventh dynamic resource allocation type.

It should be understood that the seventh dynamic resource allocation type indicates that the first signaling includes one piece of third information, where the third information indicates the resource allocation type 1 or the resource allocation type 3. In other words, in this scenario, use of the resource allocation type 1 or the resource allocation type 3 may be dynamically indicated.

② The terminal device determines, based on the second signaling, that the first signaling includes the third information, where the third information indicates the resource allocation type 1 or the resource allocation type 3.

When the third information indicates the resource allocation type 1, the description is the same as that in the scenario 4. Specifically, when the first time unit set includes only the downlink time unit, the terminal device determines that the first signaling includes the first information but does not include the second information. In other words, the terminal device interprets the first signaling according to the conventional technology and sends the first signal. When the first time unit set includes only the SBFD time unit, the terminal device determines, based on the second signaling, that the first signaling includes the first information and the second information. Then the terminal device receives the first signal in the first frequency resource set and the second frequency resource set in the first time unit set.

When the third information indicates the resource allocation type 3, the terminal device determines, based on the second signaling, that the first signaling includes the first information and the second information, and determines the first frequency resource set and the second frequency resource set based on the first signaling, which is the same as the description in the scenario 6. Then, when the first time unit set includes only the SBFD time unit, the terminal device receives the first signal in the first frequency resource set and the second frequency resource set in the first time unit set; or when the first time unit set includes only the downlink time unit, the terminal device receives the first signal in the third frequency resource set in the first time unit set.

It should be understood that, when the first time unit set includes only an SBFD time unit with only one downlink subband, in the foregoing scenarios, for a manner in which the terminal device interprets the first signaling and a method for determining the frequency resource set for sending the first signal, reference may be made to a corresponding description in which the first time unit set includes only a downlink time unit. Details are not described herein again. However, it should be noted that, for an SBFD time unit including only one downlink subband, in a scenario involving determining of a third frequency resource set, if both the first frequency resource set and the second frequency resource set are located in the downlink subband in the SBFD time unit, a method for determining the third frequency resource set is the same as that for determining the downlink time unit. In other words, a starting frequency resource in the third frequency resource set is a frequency resource with a smallest index among frequency resources in the first frequency resource set and the second frequency resource set, an ending frequency resource in the third frequency resource set is a frequency resource with a largest index among the frequency resources in the first frequency resource set and the second frequency resource set, and all frequency resources in the third frequency resource set are continuous. If one of the first frequency resource set and the second frequency resource set is not located in the downlink subband in the SBFD time unit, the third frequency resource set is the one of the first frequency resource set and the second frequency resource set that is located in the downlink subband in the SBFD time unit.

It should be understood that the foregoing scenarios are described on a basis that the first time unit set includes only one time unit type. When the first time unit set includes two time unit types (that is, when the first time unit includes only a downlink time unit and an SBFD time unit), how the terminal device interprets the first signaling and determines the frequency resource set for sending the first signal is described below by using an example.

In a possible implementation, when the first time unit set includes a downlink time unit and an SBFD time unit with only one downlink subband, the network device may not need to configure the second information for the terminal device, and the network device may indicate a resource allocation type such as the resource allocation type 0 or 1 to the terminal device by using the second signaling. Therefore, the terminal device can interpret the first signaling based on an existing resource configuration manner indicated by the second signaling, and the terminal device considers that the first signaling includes the first information (that is, the RIV) and does not include the second information. Then the terminal device sends the first signal in the frequency resource set indicated by the first signaling.

In a possible implementation, when the first time unit set includes a downlink time unit and an SBFD time unit with only one downlink subband, the network device may configure the second information for the terminal device, and the network device may indicate a resource allocation type such as the resource allocation type 2 to the terminal device by using the second signaling. Therefore, the terminal device considers that the first signaling includes the first information and the second information. Then the terminal device sends the first signal in the third frequency resource set in the downlink time unit in the first time unit set, and the terminal device sends the first signal in a fourth frequency resource set in the SBFD time unit with only one downlink subband in the first time unit set. It should be noted that, if both the first frequency resource set and the second frequency resource set are located in the downlink subband in the SBFD time unit, the fourth frequency resource is the third frequency resource set. If one of the first frequency resource set and the second frequency resource set is not located in the downlink subband in the SBFD time unit, the fourth frequency resource set is the one of the first frequency resource set and the second frequency resource set that is located in the downlink subband in the SBFD time unit.

In another possible implementation, when the first time unit set includes a downlink time unit and an SBFD time unit including at least two downlink subbands, the network device may configure the second information for the terminal device, and the network device may indicate a resource allocation type to the terminal device by using the second signaling. For example, the resource allocation type is the first dynamic resource allocation type, and the first dynamic resource allocation type indicates that the first signaling includes one piece of third information. For example, the third information indicates the resource allocation type 2. In this case, the terminal device determines that the first signaling further includes the first information and the second information. Then the terminal device receives the first signal in the first time unit set based on the first frequency resource set and the second frequency resource set. For example, for a scenario in which the network device configures the second information for the terminal device, refer to the scenarios 1, 2, 3, 6, 7, 8, 9, and 10 described above.

In still another possible implementation, when the first time unit set includes a downlink time unit, an SBFD time unit including at least two downlink subbands, and an SBFD time unit including one subband, the network device may configure the second information for the terminal device. For example, in a scenario, the network device may indicate a resource allocation type such as the resource allocation type 2 to the terminal device by using the second signaling. Therefore, the terminal device considers that the first signaling includes the first information and the second information. Then the terminal device sends the first signal in the first frequency resource set and the second frequency resource set in the SBFD time unit including at least two downlink subbands in the first time unit set, the terminal device sends the first signal in the third frequency resource set in the downlink time unit in the first time unit set, and the terminal device sends the first signal in the fourth frequency resource set in the SBFD time unit with only one downlink subband in the first time unit set. It should be noted that, if both the first frequency resource set and the second frequency resource set are located in the downlink subband in the SBFD time unit, the fourth frequency resource is the third frequency resource set. If one of the first frequency resource set and the second frequency resource set is not located in the downlink subband in the SBFD time unit, the fourth frequency resource set is the one of the first frequency resource set and the second frequency resource set that is located in the downlink subband in the SBFD time unit.

Optionally, in this implementation, the terminal device receives the first signal in the first frequency resource set and the second frequency resource set in the first time unit set.

Optionally, the terminal device receives the first signal in the first frequency resource set and the second frequency resource set in the SBFD time unit in the first time unit set, and receives the first signal in the third frequency resource set in the downlink time unit in the first time unit set. For descriptions of the third frequency resource, refer to the foregoing descriptions. Details are not described herein again.

It should be understood that in this application, a symbol "×" represents a multiplication operation, and a symbol "/" represents a division operation.

It should be further understood that sequence numbers of the foregoing processes do not mean an execution order. The execution order of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions between different embodiments are consistent and may be mutually referenced, and technical features in different embodiments may be combined into a new embodiment based on an internal logical relationship thereof..

It should be further understood that, in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by a device (such as the terminal device or the network device) may also be implemented by a component (such as a chip or a circuit) of the device.

The methods provided in embodiments of this application are described above in detail with reference to FIG. 1 to FIG. 5. The foregoing methods are mainly described from a perspective of interaction between the terminal device and the network device. It may be understood that, to implement the foregoing functions, the terminal device and the network device include corresponding hardware structures and/or software modules for performing the functions.

A person skilled in the art should be aware that units and algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

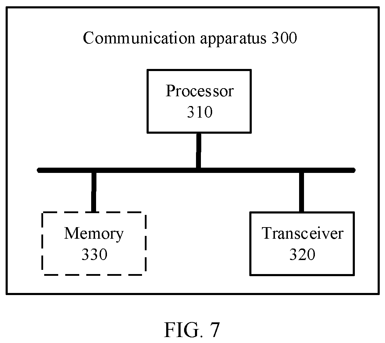

Communication apparatuses provided in embodiments of this application are described below in detail with reference to FIG. 6 and FIG. 7. It should be understood that descriptions of apparatus embodiments correspond to the descriptions of the method embodiments. Therefore, for content that is not described in detail, refer to the foregoing method embodiments. For brevity, details of some content are not described herein again. In embodiments of this application, the terminal device or the network device may be divided into functional modules based on the foregoing method examples. For example, the functional modules may be obtained through division in a one-to-one correspondence with the functions, or two or more functions may be integrated into one processing module. The integrated module may be implemented in a form of hardware, or may be implemented in a form of a software functional module. It should be noted that the module division in embodiments of this application is an example, and is merely logical function division. There may be another division manner in an actual implementation. In the following description, it is assumed that the functional modules are obtained through division in a one-to-one correspondence with the functions.

The foregoing describes in detail the data transmission methods provided in this application. The following describes a communication apparatus provided in this application. In a possible implementation, the apparatus is configured to implement steps or procedures corresponding to the receiver device in the foregoing method embodiments. In another possible implementation, the apparatus is configured to implement steps or procedures corresponding to the transmitter device in the foregoing method embodiments.

FIG. 6 is a block diagram of a communication apparatus 200 according to an embodiment of this application. As shown in FIG. 6, the apparatus 200 may include a communication unit 210 and a processing unit 220. The communication unit 210 may communicate with an external device, and the processing unit 220 is configured to process data. The communication unit 210 may also be referred to as a communication interface or a transceiver unit.

In a possible design, the apparatus 200 may implement steps or procedures performed by the transmitter device in the foregoing method embodiments. The processing unit 220 is configured to perform processing-related operations of the transmitter device in the foregoing method embodiments, and the communication unit 210 is configured to perform sending-related operations of the transmitter device in the foregoing method embodiments.

In another possible design, the apparatus 200 may implement steps or procedures performed by the receiver device in the foregoing method embodiments. The communication unit 210 is configured to perform receiving-related operations of the receiver device in the foregoing method embodiments, and the processing unit 220 is configured to perform processing-related operations of the receiver device in the foregoing method embodiments.

It should be understood that the apparatus 200 herein is embodied in a form of functional units. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described function. **In** an optional example, a person skilled in the art may understand that the apparatus 200 may be specifically the transmitter device in the foregoing embodiments, and may be configured to perform procedures and/or steps corresponding to the transmitter device in the foregoing method embodiments. Alternatively, the apparatus 200 may be specifically the receiver device in the foregoing embodiments, and may be configured to perform procedures and/or steps corresponding to the receiver device in the foregoing method embodiments. To avoid repetition, details are not described herein again.

The apparatus 200 in each of the foregoing solutions has functions of implementing corresponding steps performed by the transmitter device in the foregoing method, or the apparatus 200 in each of the foregoing solutions has functions of implementing corresponding steps performed by the receiver device in the foregoing method. The functions may be implemented by hardware, or may be implemented by hardware by executing corresponding software. The hardware or software includes one or more modules corresponding to the foregoing functions. For example, the communication unit may be replaced with a transceiver (for example, a sending unit in the communication unit may be replaced with a transmitter, and a receiving unit in the communication unit may be replaced with a receiver), and another unit such as the processing unit may be replaced with a processor, so as to separately perform sending and receiving operations and related processing operations in each method embodiment.

In addition, alternatively, the communication unit may be a transceiver circuit (for example, may include a receiving circuit and a sending circuit), and the processing unit may be a processing circuit. In this embodiment of this application, the apparatus in FIG. 6 may be an AP or a STA in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 7 is a block diagram of a communication apparatus 300 according to an embodiment of this application. The apparatus 300 includes a processor 310 and a transceiver 320. The processor 310 and the transceiver 320 communicate with each other through an internal connection path, and the processor 310 is configured to execute instructions, to control the transceiver 320 to send a signal and/or receive a signal.

Optionally, the apparatus 300 may further include a memory 330. The memory 330 communicates with the processor 310 and the transceiver 320 through internal connection paths. The memory 330 is configured to store instructions, and the processor 310 may execute the instructions stored in the memory 330. In a possible implementation, the apparatus 300 is configured to implement procedures and steps corresponding to the transmitter device in the foregoing method embodiments. In another possible implementation, the apparatus 300 is configured to implement procedures and steps corresponding to the receiver device in the foregoing method embodiments.

It should be understood that the apparatus 300 may be specifically the transmitter device or the receiver device in the foregoing embodiments, or may be a chip or a chip system. Correspondingly, the transceiver 320 may be a transceiver circuit of the chip. This is not limited herein. Specifically, the apparatus 300 may be configured to perform steps and/or procedures corresponding to the transmitter device or the receiver device in the foregoing method embodiments. Optionally, the memory 330 may include a read-only memory and a random access memory, and provide instructions and data for the processor. A part of the memory may further include a non-volatile random access memory. For example, the memory may further store information of a device type. The processor 310 may be configured to execute the instructions stored in the memory; and when the processor 310 executes the instructions stored in the memory, the processor 310 is configured to perform steps and/or procedures corresponding to the transmitter device or the receiver device in the foregoing method embodiments.

In an implementation process, steps in the foregoing methods can be completed by using a hardware integrated logic circuit in the processor, or by using instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor. To avoid repetition, details are not described herein again.

It should be noted that, the processor in embodiments of this application may be an integrated circuit chip, and has a signal processing capability. In an implementation process, the steps of the foregoing method embodiments may be completed by a hardware integrated logic circuit in the processor or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor.

It may be understood that the memory in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), and an electrically erasable programmable read-only memory (electrically EPROM, EEPROM), or a flash memory. The volatile memory may be a random access memory (random access memory, RAM), which is used as an external cache. Through illustrative but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the system and the method described in this specification includes but is not limited to these and any other appropriate type of memory.

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

In addition, this application further provides a computer-readable storage medium. The computer-readable storage medium stores computer instructions. When the computer instructions are run on a computer, operations and/or procedures performed by the terminal device or the network device in the method embodiments of this application are performed.

This application further provides a computer program product. The computer program product includes computer program code or instructions. When the computer program code or the instructions are run on a computer, operations and/or procedures performed by the terminal device or the network device in the method embodiments of this application are performed.

In addition, this application further provides a chip, and the chip includes a processor. A memory configured to store a computer program is disposed independent of the chip. The processor is configured to execute the computer program stored in the memory, so that an operation and/or processing performed by the terminal device or the network device in any method embodiment are/is performed.

Further, the chip may include a communication interface. The communication interface may be an input/output interface, an interface circuit, or the like. Further, the chip may include a memory.

In addition, this application further provides a communication system. The communication system includes the terminal device and the network device in embodiments of this application.

It should further be noted that the memory described in this specification is intended to include, but is not limited to, these memories and any memory of another appropriate type.

A person of ordinary skill in the art may be aware that units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. A person skilled in the art may clearly understand that, for the purpose of convenient and brief description, for a detailed working process of the foregoing system, apparatus, and unit, reference may be made to a corresponding process in the foregoing method embodiments. Details are not described herein again. In the several embodiments provided in this application, it should be understood that the disclosed system, apparatus, and method may be implemented in other manners. For example, the foregoing apparatus embodiments are merely examples. For example, division of the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, and may be located in one position, or may be distributed on a plurality of network units. Some or all of the units may be selected depending on actual requirements, to achieve the objectives of the solutions in embodiments. In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, the specific features, structures, or characteristics may be combined in one or more embodiments in any appropriate manner.

It should be further understood that ordinal numbers such as "first" and "second" mentioned in embodiments of this application are used to distinguish between a plurality of objects, and are not intended to limit sizes, content, an order, a time sequence, priorities, importance, or the like of the plurality of objects. For example, the first information and the second information do not indicate a difference in an information amount, content, a priority, importance, or the like.

It should be further understood that, in this application, the terms "when", "provided that", and "if" mean that a network element performs corresponding processing in an objective situation, but do not impose a time limit, do not require the network element to take a determining action during implementation, and do not mean other limitations either.

It should be further understood that in this application, "at least one" means one or more, and "a plurality of" means two or more. "At least one of items (pieces)" or a similar expression thereof refers to one item (piece) or a plurality of items (pieces), that is, any combination of these items, including any combination of singular items (pieces) or plural items (pieces). For example, at least one of a, b, or c represents a, b, c, a and b, a and c, b and c, or a and b and c.

It should be further understood that, unless otherwise specified, a meaning similar to "an item includes one or more of the following: A, B, and C" in this application usually means that the item may be any one of the following: A; B; C; A and B; A and C; B and C; A, B and C; A and A; A, A and A; A, A and B; A, A and C; A, B and B; A, C and C; B and B, B, B and B, B, B and C, C and C; C, C and C, and other combinations of A, B, and C. The foregoing uses three elements A, B, and C as an example to describe an optional case of the item. When an expression is "an item includes at least one of the following: A, B, ..., and X", that is, when more elements are included in the expression, a case to which the item is applicable may also be obtained according to the foregoing rule.

It should be further understood that, the term "and/or" in this application describes only an association relationship between associated objects, and represents that three relationships may exist. For example, A and/or B may represent the following cases: A exists alone, both A and B exist, and B exists alone, where A and B may be singular or plural. The character "/" generally indicates an "or" relationship between associated objects. For example, A/B indicates A or B.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

**1.**   An uplink transmission method, comprising:

receiving, by a terminal device, first signaling from a network device, wherein the first signaling indicates the terminal device to send a first signal in a frequency hopping mode in a first time unit set, the first signal is carried on a first physical uplink shared channel PUSCH or a first physical uplink control channel PUCCH, and the first time unit set comprises at least two SBFD time units;

determining, by the terminal device, a second frequency hopping pattern based on a first frequency hopping pattern, wherein the first frequency hopping pattern indicates positions of N different starting frequency resources for sending the first signal in the frequency hopping mode in at least two uplink time units, the second frequency hopping pattern indicates positions of N different starting frequency resources for sending the first signal in the frequency hopping mode in at least two SBFD time units, the positions of the starting frequency resources indicated by the second frequency hopping pattern are located in uplink subbands in the at least two SBFD time units, and N is an integer greater than or equal to 2; and

sending, by the terminal device, the first signal in the at least two SBFD time units based on the second frequency hopping pattern.

2. An uplink transmission method, comprising:

sending, by a network device, first signaling to a terminal device, wherein the first signaling indicates the terminal device to send a first signal in a frequency hopping mode in a first time unit set, the first signal is carried on a first physical uplink shared channel PUSCH or a first physical uplink control channel PUCCH, and the first time unit set comprises at least two SBFD time units;

determining, by the network device, a second frequency hopping pattern based on a first frequency hopping pattern, wherein the first frequency hopping pattern indicates positions of N different starting frequency resources for sending the first signal in the frequency hopping mode in at least two uplink time units, the second frequency hopping pattern indicates positions of N different starting frequency resources for sending the first signal in the frequency hopping mode in at least two SBFD time units, the positions of the starting frequency resources indicated by the second frequency hopping pattern are located in uplink subbands in the at least two SBFD time units, and N is an integer greater than or equal to 2; and

receiving, by the network device, the first signal from the terminal device in the at least two SBFD time units based on the second frequency hopping pattern.

3. The method according to claim 1 or 2, wherein an index $RB'_{start,j}$ of a $j^{th}$ starting frequency resource of the N starting frequencies in the second frequency hopping pattern is determined based on $RB_{start,j} mod N^{size}_{UL\,subband}$, wherein $RB_{start,j}$ is an index of a $j^{th}$ starting frequency resource of the N starting frequency resources in the first frequency hopping pattern, $N^{size}_{UL\,subband}$ is a quantity of frequency resources of the uplink subband in the SBFD time unit, and j = 1, 2, ..., N.

4. The method according to claim 3, wherein the index $RB'_{start,j}$ of the $j^{th}$ starting frequency resource of the N starting frequencies in the second frequency hopping pattern meets the following formula:

$$RB'_{start,j} = RB_{start,j} mod N^{size}_{UL\,subband} + RB^{start}_{UL\,subband},$$

wherein

$RB^{start}_{UL\,subband}$ is an index of a starting frequency resource of the uplink subband in the SBFD time unit.

5. The method according to claim 1 or 2, wherein an index $RB'_{start,j}$ of a $j^{th}$ starting frequency resource of the N starting frequencies in the second frequency hopping pattern is determined based on a first scaling parameter α and $RB_{start,j}$, wherein $RB_{start,j}$ is an index of a $j^{th}$ starting frequency resource of the N starting frequencies in the first frequency hopping pattern, α is greater than 0 and less than 1, and j = 1, 2, ..., N.

6. The method according to claim 5, wherein the index $RB'_{start,j}$ of the $j^{th}$ starting frequency resource of the N frequency hopping starting frequencies in the second frequency hopping pattern meets the following formula:

$$RB'_{start,j} = [RB_{start,j} \times \alpha] + RB^{start}_{UL\ subband},$$

wherein

$RB^{start}_{UL\ subband}$ is an index of a starting frequency resource of the uplink subband in the SBFD time unit, and [ ] represents a round-up operation, a round-down operation, or a round-off operation.

7. A downlink transmission method, comprising:

receiving, by a terminal device, first signaling from a network device, wherein the first signaling indicates the terminal device to receive a first signal in a first time unit set, the first signaling comprises first information and second information, the first information indicates a position of a starting frequency resource in a first frequency resource set and a quantity of frequency resources comprised in the first frequency resource set, the second information indicates a spacing between the starting frequency resource in the first frequency resource set and a starting frequency resource in a second frequency resource set, the first signal is carried on a first physical downlink shared channel PDSCH, the first time unit set comprises a first time unit, and the first time unit is an SBFD time unit comprising at least two downlink subbands;
determining, by the terminal device, the first frequency resource set based on the first information;
determining, by the terminal device, the second frequency resource set based on the first information and the second information, wherein a quantity of frequency resources comprised in the second frequency resource set is the same as the quantity of frequency resources comprised in the first frequency resource set, or a quantity of frequency resources comprised in the second frequency resource set is predefined or configured by the network device; and
receiving, by the terminal device, the first signal from the network device in the first frequency resource set and the second frequency resource set in the first time unit.

8. The method according to claim 7, wherein the first time unit set further comprises a second time unit, the second time unit is a downlink time unit, and the method further comprises:
receiving, by the terminal device, the first signal in the first frequency resource set and the second frequency resource set in the second time unit.

9. The method according to claim 7, wherein the first time unit set further comprises a second time unit, the second time unit is a downlink time unit, and the method further comprises:

determining, by the terminal device, a third frequency resource set, wherein a starting frequency resource in the third frequency resource set is a frequency resource with a smallest index among frequency resources in the first frequency resource set and the second frequency resource set, an ending frequency resource in the third frequency resource set is a frequency resource with a largest index among the frequency resources in the first frequency resource set and the second frequency resource set, and the third frequency resource set is a segment of continuous frequency resources; and
receiving, by the terminal device, the first signal from the network device in the third frequency resource set in the second time unit.

10. A downlink transmission method, comprising:

sending, by a network device, first signaling to a terminal device, wherein the first signaling indicates the terminal device to receive a first signal in a first time unit set, the first signaling comprises first information and second information, the first information indicates a position of a starting frequency resource in a first frequency resource set and a quantity of frequency resources comprised in the first frequency resource set, the second information indicates a spacing between the starting frequency resource in the first frequency resource set and a starting frequency resource in a second frequency resource set, the first signal is carried on a first physical downlink shared channel PDSCH, the first time unit set comprises a first time unit, and the first time unit is an SBFD time unit comprising at least two downlink subbands; and
sending, by the network device, the first signal to the terminal device in the first frequency resource set and the second frequency resource set in the first time unit, wherein a quantity of frequency resources comprised in the second frequency resource set is the same as the quantity of frequency resources comprised in the first frequency resource set, or a quantity of frequency resources comprised in the second frequency resource set is predefined or configured by the network device.

11. The method according to claim 10, wherein the first time unit set further comprises a second time unit, the second time unit is a downlink time unit, and the method further comprises:
sending, by the network device, the first signal to the terminal device in the first frequency resource set and the second frequency resource set in the second time unit.

12. The method according to claim 10, wherein the first time unit set further comprises a second time unit, the second time unit is a downlink time unit, and the method further comprises:

determining, by the network device, a third frequency resource set, wherein a starting frequency resource in the third frequency resource set is a frequency resource with a smallest index among frequency resources in the first frequency resource set and the second frequency resource set, an ending frequency resource in the third frequency resource set is a frequency resource with a largest index among the frequency resources in the first frequency resource set and the second frequency resource set, and the third frequency resource set is a segment of continuous frequency resources; and
sending, by the network device, the first signal to the terminal device in the third frequency resource set in the second time unit.

13. A downlink transmission method, comprising:

receiving, by a terminal device, first signaling from a network device, wherein the first signaling indicates the terminal device to receive a first signal in a first time unit set;
determining, by the terminal device, the first time unit set, wherein
when the first time unit set comprises a first time unit, the first time unit is an SBFD time unit comprising at least two downlink subbands, the first signaling comprises first information and second information, the first information indicates a position of a starting frequency resource in a first frequency resource set and a quantity of frequency resources comprised in the first frequency resource set, and the second information indicates a spacing between the starting frequency resource in the first frequency resource set and a starting frequency resource in a second frequency resource set;
determining, by the terminal device, the first frequency resource set based on the first information, and determining, by the terminal device, the second frequency resource set based on the first information and the second information, wherein a quantity of frequency resources comprised in the second frequency resource set is the same as the quantity of frequency resources comprised in the first frequency resource set, or a quantity of frequency resources comprised in the second frequency resource set is predefined or configured by the network device;
receiving, by the terminal device, the first signal in the first frequency resource set and the second frequency resource set in the first time unit set, wherein
when the first time unit set does not comprise the first time unit, the first signaling comprises fourth information, and the fourth information indicates a position of a starting frequency resource in a fourth frequency resource set and a quantity of frequency resources comprised in the fourth frequency resource set;
determining, by the terminal device, the fourth frequency resource set based on the fourth information; and
sending, by the terminal device, the first signal in the fourth frequency resource set in the first time unit set.

14. A downlink transmission method, comprising:

sending, by a network device, first signaling to a terminal device, wherein the first signaling indicates the terminal device to receive a first signal in a first time unit set, wherein
when the first time unit set comprises a first time unit, the first time unit is an SBFD time unit comprising at least two downlink subbands, the first signaling comprises first information and second information, the first information indicates a position of a starting frequency resource in a first frequency resource set and a quantity of frequency resources comprised in the first frequency resource set, and the second information indicates a spacing between the starting frequency resource in the first frequency resource set and a starting frequency resource in a second frequency resource set;
sending, by the network device, the first signal to the terminal device in the first frequency resource set and the second frequency resource set in the first time unit set, wherein a quantity of frequency resources comprised in the second frequency resource set is the same as the quantity of frequency resources comprised in the first frequency resource set, or a quantity of frequency resources comprised in the second frequency resource set is predefined or configured by the network device, wherein
when the first time unit set does not comprise the first time unit, the first signaling comprises fourth information, and the fourth information indicates a position of a starting frequency resource in a fourth frequency resource set and a quantity of frequency resources comprised in the fourth frequency resource set; and
sending, by the network device, the first signal in the fourth frequency resource set in the first time unit set.

15. A communication apparatus, comprising:

a communication unit, configured to receive first signaling from a network device, wherein the first signaling indicates a terminal device to send a first signal in a frequency hopping mode in a first time unit set, the first signal is carried on a first physical uplink shared channel PUSCH or a first physical uplink control channel PUCCH, and the first time unit set comprises at least two SBFD time units; and
a processing unit, further configured to determine a second frequency hopping pattern based on a first frequency hopping pattern, wherein the first frequency hopping pattern indicates positions of N different starting frequency resources for sending the first signal in the frequency hopping mode in at least two uplink time units, the second frequency hopping pattern indicates positions of N different starting frequency resources for sending the first signal in the frequency hopping mode in at least two SBFD time units, the positions of the starting frequency resources indicated by the second frequency hopping pattern are located in uplink subbands in the at least two SBFD time units, and N is an integer greater than or equal to 2, wherein
the communication unit is further configured to send the first signal in the at least two SBFD time units based on the second frequency hopping pattern.

16. A communication apparatus, comprising:

a communication unit, configured to send first signaling to a terminal device, wherein the first signaling indicates the terminal device to send a first signal in a frequency hopping mode in a first time unit set, the first signal is carried on a first physical uplink shared channel PUSCH or a first physical uplink control channel PUCCH, and the first time unit set comprises at least two SBFD time units; and
a processing unit, configured to determine a second frequency hopping pattern based on a first frequency hopping pattern, wherein the first frequency hopping pattern indicates positions of N different starting frequency resources for sending the first signal in the frequency hopping mode in at least two uplink time units, the second frequency hopping pattern indicates positions of N different starting frequency resources for sending the first signal in the frequency hopping mode in at least two SBFD time units, the positions of the starting frequency resources indicated by the second frequency hopping pattern are located in uplink subbands in the at least two SBFD time units, and N is an integer greater than or equal to 2, wherein
the communication unit is further configured to receive the first signal from the terminal device in the at least two SBFD time units based on the second frequency hopping pattern.

17. The apparatus according to claim 15 or 16, wherein an index $RB'_{start,j}$ of a j$^{th}$ starting frequency resource of the N starting frequencies in the second frequency hopping pattern is determined based on $RB_{start,j} \, mod N^{size}_{UL\,subband}$, wherein $RB_{start,j}$ is an index of a j$^{th}$ starting frequency resource of the N starting frequency resources in the first frequency hopping pattern, $N^{size}_{UL\,subband}$ is a quantity of frequency resources of the uplink subband in the SBFD time unit, and j = 1, 2, ..., N.

18. The apparatus according to claim 17, wherein the index $RB'_{start,j}$ of the j$^{th}$ starting frequency resource of the N starting frequencies in the second frequency hopping pattern meets the following formula:

$$RB'_{start,j} = RB_{start,j} \, mod N^{size}_{UL\,subband} + RB^{start}_{UL\,subband},$$

wherein

$RB^{start}_{UL\,subband}$ is an index of a starting frequency resource of the uplink subband in the SBFD time unit.

19. The apparatus according to claim 15 or 16, wherein an index $RB'_{start,j}$ of a j$^{th}$ starting frequency resource of the N starting frequencies in the second frequency hopping pattern is determined based on a first scaling parameter $\alpha$ and $RB_{start,j}$, wherein $RB_{start,j}$ is an index of a j$^{th}$ starting frequency resource of the N starting frequencies in the first frequency hopping pattern, $\alpha$ is greater than 0 and less than 1, and j = 1, 2, ..., N.

20. The apparatus according to claim 19, wherein the index $RB'_{start,j}$ of the j$^{th}$ starting frequency resource of the N frequency hopping starting frequencies in the second frequency hopping pattern meets the following formula:

$$RB'_{start,j} = [RB_{start,j} \times \alpha] + RB^{start}_{UL\ subband} ,$$

wherein

$RB^{start}_{UL\ subband}$ is an index of a starting frequency resource of the uplink subband in the SBFD time unit, and [ ] represents a round-up operation, a round-down operation, or a round-off operation.

21. A communication apparatus, comprising:

a communication unit, configured to receive first signaling from a network device, wherein the first signaling indicates a terminal device to receive a first signal in a first time unit set, the first signaling comprises first information and second information, the first information indicates a position of a starting frequency resource in a first frequency resource set and a quantity of frequency resources comprised in the first frequency resource set, the second information indicates a spacing between the starting frequency resource in the first frequency resource set and a starting frequency resource in a second frequency resource set, the first signal is carried on a first physical downlink shared channel PDSCH, the first time unit set comprises a first time unit, and the first time unit is an SBFD time unit comprising at least two downlink subbands; and
a processing unit, configured to determine the first frequency resource set based on the first information, wherein the processing unit is further configured to determine the second frequency resource set based on the first information and the second information, wherein a quantity of frequency resources comprised in the second frequency resource set is the same as the quantity of frequency resources comprised in the first frequency resource set, or a quantity of frequency resources comprised in the second frequency resource set is predefined or configured by the network device; and
the communication unit is further configured to receive the first signal from the network device in the first frequency resource set and the second frequency resource set in the first time unit.

22. The apparatus according to claim 21, wherein the first time unit set further comprises a second time unit, the second time unit is a downlink time unit, and
the communication unit is further configured to receive the first signal in the first frequency resource set and the second frequency resource set in the second time unit.

23. The apparatus according to claim 21, wherein the first time unit set further comprises a second time unit, and the second time unit is a downlink time unit; and

the processing unit is further configured to determine a third frequency resource set, wherein a starting frequency resource in the third frequency resource set is a frequency resource with a smallest index among frequency resources in the first frequency resource set and the second frequency resource set, an ending frequency resource in the third frequency resource set is a frequency resource with a largest index among the frequency resources in the first frequency resource set and the second frequency resource set, and the third frequency resource set is a segment of continuous frequency resources; and
the communication unit is further configured to receive the first signal from the network device in the third frequency resource set in the second time unit.

24. A communication apparatus, comprising:

a communication unit, configured to send first signaling to a terminal device, wherein the first signaling indicates the terminal device to receive a first signal in a first time unit set, the first signaling comprises first information and second information, the first information indicates a position of a starting frequency resource in a first frequency resource set and a quantity of frequency resources comprised in the first frequency resource set, the second information indicates a spacing between the starting frequency resource in the first frequency resource set and a starting frequency resource in a second frequency resource set, the first signal is carried on a first physical downlink shared channel PDSCH, the first time unit set comprises a first time unit, and the first time unit is an SBFD time unit comprising at least two downlink subbands, wherein

the communication unit is further configured to send the first signal to the terminal device in the first frequency resource set and the second frequency resource set in the first time unit, wherein a quantity of frequency resources comprised in the second frequency resource set is the same as the quantity of frequency resources comprised in the first frequency resource set, or a quantity of frequency resources comprised in the second frequency resource set is predefined or configured by the network device.

25. The apparatus according to claim 24, wherein the first time unit set further comprises a second time unit, and the second time unit is a downlink time unit; and
the communication unit is further configured to send the first signal to the terminal device in the first frequency resource set and the second frequency resource set in the second time unit.

26. The apparatus according to claim 24, wherein the first time unit set further comprises a second time unit, the second time unit is a downlink time unit, and the apparatus further comprises:

a processing unit, configured to determine a third frequency resource set, wherein a starting frequency resource in the third frequency resource set is a frequency resource with a smallest index among frequency resources in the first frequency resource set and the second frequency resource set, an ending frequency resource in the third frequency resource set is a frequency resource with a largest index among the frequency resources in the first frequency resource set and the second frequency resource set, and the third frequency resource set is a segment of continuous frequency resources, wherein
the communication unit is further configured to send the first signal to the terminal device in the third frequency resource set in the second time unit.

27. A communication apparatus, comprising:

a communication unit, configured to receive first signaling from a network device, wherein the first signaling indicates a terminal device to receive a first signal in a first time unit set; and
a processing unit, configured to determine the first time unit set, wherein
when the first time unit set comprises a first time unit, the first time unit is an SBFD time unit comprising at least two downlink subbands, the first signaling comprises first information and second information, the first information indicates a position of a starting frequency resource in a first frequency resource set and a quantity of frequency resources comprised in the first frequency resource set, and the second information indicates a spacing between the starting frequency resource in the first frequency resource set and a starting frequency resource in a second frequency resource set;
the processing unit is further configured to determine the first frequency resource set based on the first information, and determine, by the terminal device, the second frequency resource set based on the first information and the second information, wherein a quantity of frequency resources comprised in the second frequency resource set is the same as the quantity of frequency resources comprised in the first frequency resource set, or a quantity of frequency resources comprised in the second frequency resource set is predefined or configured by the network device;
the communication unit is further configured to receive the first signal in the first frequency resource set and the second frequency resource set in the first time unit set, wherein
when the first time unit set does not comprise the first time unit, the first signaling comprises fourth information, and the fourth information indicates a position of a starting frequency resource in a fourth frequency resource set and a quantity of frequency resources comprised in the fourth frequency resource set;
the processing unit is further configured to determine the fourth frequency resource set based on the fourth information; and
the communication unit is further configured to send the first signal in the fourth frequency resource set in the first time unit set.

28. A communication apparatus, comprising:

a communication unit, configured to send first signaling to a terminal device, wherein the first signaling indicates the terminal device to receive a first signal in a first time unit set, wherein

when the first time unit set comprises a first time unit, the first time unit is an SBFD time unit comprising at least two downlink subbands, the first signaling comprises first information and second information, the first information indicates a position of a starting frequency resource in a first frequency resource set and a quantity of frequency resources comprised in the first frequency resource set, and the second information indicates a spacing between the starting frequency resource in the first frequency resource set and a starting frequency resource in a second frequency resource set;

the communication unit is further configured to send the first signal to the terminal device in the first frequency resource set and the second frequency resource set in the first time unit set, wherein a quantity of frequency resources comprised in the second frequency resource set is the same as the quantity of frequency resources comprised in the first frequency resource set, or a quantity of frequency resources comprised in the second frequency resource set is predefined or configured by the network device, wherein

when the first time unit set does not comprise the first time unit, the first signaling comprises fourth information, and the fourth information indicates a position of a starting frequency resource in a fourth frequency resource set and a quantity of frequency resources comprised in the fourth frequency resource set; and

the communication unit is further configured to send the first signal in the fourth frequency resource set in the first time unit set.

29. A communication apparatus, wherein the communication apparatus comprises at least one processor and at least one memory, the at least one memory is configured to store a computer program or instructions, and the at least one processor is configured to execute the computer program or instructions in the memory to perform the method according to any one of claims 1 and 3 to 6, the method according to any one of claims 2 to 6, the method according to any one of claims 7 to 9, the method according to any one of claims 10 to 12, the method according to claim 13, or the method according to claim 14.

30. A computer-readable storage medium, wherein the computer-readable storage medium stores computer instructions, and when the computer instructions are run on a computer, the method according to any one of claims 1 and 3 to 6, the method according to any one of claims 2 to 6, the method according to any one of claims 7 to 9, the method according to any one of claims 10 to 12, the method according to claim 13, or the method according to claim 14 is performed.

31. A computer program product, wherein the computer program product comprises computer program code, and when the computer program code is run on a computer, the method according to any one of claims 1 and 3 to 6, the method according to any one of claims 2 to 6, the method according to any one of claims 7 to 9, the method according to any one of claims 10 to 12, the method according to claim 13, or the method according to claim 14 is performed.

FIG. 1

FIG. 2

PUSCH

Time-frequency resource used for downlink transmission

Time-frequency resource used for uplink transmission

$RB_{offset}$
(used only for
the X slot)

$RB_{offset}$
(used only for
the U slot)

$N_{BWP}^{size}$

$RB_{start}$
(used only for
the X slot)

X  X  X  U  X  X  X  U

$RB_{start}$
(used only for
the U slot)

FIG. 3

| Network device | | Terminal device |

S410: First signaling, where the first signaling instructs to send a first signal in a frequency hopping mode in a first time unit set

S420: Determine a second frequency hopping pattern based on a first frequency hopping pattern

S430: Determine the second frequency hopping pattern based on the first frequency hopping pattern

S440: Send the first signal in an SBFD time unit in the first time unit set based on the second frequency hopping pattern

FIG. 4

Network device

Terminal device

S510: First signaling, where the first signaling instructs to receive a first signal in a first time unit set

S520: Determine a first frequency resource set based on first information, and the terminal device determines a second frequency resource set based on the first information and second information

S530: Send the first signal in the first frequency resource set and the second frequency resource set in a first time unit

FIG. 5

Communication apparatus 200

Communication unit 210

Processing unit 220

FIG. 6

Communication apparatus 300

Processor
310

Memory
330

Transceiver
320

FIG. 7

## INTERNATIONAL SEARCH REPORT

| International application No. |
|---|
| **PCT/CN2023/121827** |

| A. | CLASSIFICATION OF SUBJECT MATTER |
|---|---|

H04W 72/1268(2023.01)i;  H04W 72/12(2023.01)i;  H04W 72/0446(2023.01)i;  H04W 72/0453(2023.01)i;  H04W 72/232(2023.01)i;  H04L 5/00(2006.01)i

According to International Patent Classification (IPC) or to both national classification and IPC

| B. | FIELDS SEARCHED |
|---|---|

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 子带全双工, 跳频, 上行, 下行, 起始频率资源, 图案, subband non-overlapping full duplex, SBFD, frequency hopping, UL, DL, pattern

| C. | DOCUMENTS CONSIDERED TO BE RELEVANT |
|---|---|

| Category* | Citation of document, with indication, where appropriate, of the relevant passages | Relevant to claim No. |
|---|---|---|
| X | ERICSSON. "Sub-band Non-overlapping Full Duplex" *3GPP TSG-RAN WG1 Meeting #110 Tdoc R1-2207462*, 12 August 2022 (2022-08-12), full text, section 3 | 1-6, 15-20, 29-31 |
| A | ERICSSON. "Sub-band Non-overlapping Full Duplex" *3GPP TSG-RAN WG1 Meeting #110 Tdoc R1-2207462*, 12 August 2022 (2022-08-12), full text, section 3 | 7-14, 21-28 |
| A | CN 113395714 A (CHINA TELECOM CORP., LTD.) 14 September 2021 (2021-09-14) entire document | 1-31 |
| A | CN 114667685 A (HUAWEI TECHNOLOGIES CO., LTD.) 24 June 2022 (2022-06-24) entire document | 1-31 |
| A | US 2022052882 A1 (QUALCOMM INC.) 17 February 2022 (2022-02-17) entire document | 1-31 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 November 2023** | **05 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/121827** |

| Patent document cited in search report | | | Publication date (day/month/year) | Patent family member(s) | | | Publication date (day/month/year) |
| --- | --- | --- | --- | --- | --- | --- | --- |
| CN | 113395714 | A | 14 September 2021 | None | | | |
| CN | 114667685 | A | 24 June 2022 | None | | | |
| US | 2022052882 | A1 | 17 February 2022 | US | 11652671 | B2 | 16 May 2023 |

Form PCT/ISA/210 (patent family annex) (July 2022)

**REFERENCES CITED IN THE DESCRIPTION**

**Patent documents cited in the description**

- CN 2022

- CN 11214269